# EUROPÄISCHE PATENTSCHRIFT

(11) **EP 3 002 736 B1**
(45) Veröffentlichungstag und Bekanntmachung des Hinweises auf die Patenterteilung: **08.07.2020**
(21) Anmeldenummer: 15186733.0
(22) Anmeldetag: 24.09.2015
(51) Int. Cl.: G07C 9/00, B60R 25/20, B60Q 1/50

(54) **VORRICHTUNG ZUR AKTIVIERUNG EINER FUNKTION EINES FAHRZEUGES**
DEVICE FOR ACTIVATING A FUNCTION OF A VEHICLE
DISPOSITIF D'ACTIVATION D'UNE FONCTION D'UN VEHICULE AUTOMOBILE

(30) Priorität: 26.09.2014 DE 102014114049
(43) Veröffentlichungstag der Anmeldung: 06.04.2016
(73) Patentinhaber: Huf Hülsbeck & Fürst GmbH & Co. KG, 42551 Velbert (DE)
(72) Erfinder: Hansen-Rüther, Dirk, 42289 Wuppertal (DE)
(74) Vertreter: Vogel, Andreas

(56) Entgegenhaltungen:
- DE-A1-102006 000 777
- DE-A1-102008 021 989
- DE-A1-102009 044 389
- FR-A1- 2 936 545
- FR-A1- 2 995 269
- US-A1- 2010 214 797
- US-B2- 7 054 045

## Beschreibung

Die Erfindung betrifft eine Vorrichtung zur Aktivierung einer Funktion eines Fahrzeuges gemäß dem unabhängigen Anspruch 1. Ferner bezieht sich die Erfindung auf ein Verfahren zur Aktivierung einer Funktion eines Fahrzeuges gemäß dem unabhängigen Anspruch 8.

Es ist aus dem Stand der Technik bekannt, dass Näherungssensoren eines Fahrzeuges, insbesondere eines Kraftfahrzeuges eingesetzt werden, um eine Annäherung eines Benutzers zu detektieren. Hierzu werden beispielsweise optische Sensoren oder kapazitive Sensoren eingesetzt. Wird eine Annäherung detektiert, so kann beispielsweise durch eine Kommunikationsvorrichtung des Fahrzeuges ein Authentifizierungsvorgang mit einem ID-Geber (Identifikationsgeber) des Benutzers initiiert werden. Es ist bekannt, hierzu ein Wecksignal an den ID-Geber über Funk zu übertragen, so dass der Authentifizierungsvorgang automatisch bei einer Annäherung ohne manuelle Bedienung des ID-Gebers durch den Benutzer erfolgen kann. Hierzu eignen sich beispielsweise Sicherheitssysteme mit Passiv Keyless-Entry und/oder Keyless-Go Funktionalität. Ferner können durch eine manuelle Bedienung des ID-Gebers auch weitere Funktionen des Fahrzeuges, wie z. B. das Öffnen einer Heckklappe aktiviert werden. Es ist zudem möglich, dass auch weitere Funktionen des Fahrzeuges angesteuert werden, wie z. B. ein Aufleuchten der Blinklichter bei einer erfolgreichen Authentifizierung oder die Aktivierung einer Beleuchtung des Fahrzeuges.

Die Schrift DE 10 2006 000 777 offenbart eine Fahrzeugzutrittssteuerung unter Verwendung einer abgebildeten Tastatur.

Nachteilhaft ist jedoch, dass zur Aktivierung bestimmter Funktionen eine manuelle Bedienung (z. B. des ID-Gebers) erfolgen muss. Zwar kann bei einer Annäherung des Benutzers eine Entriegelung des Fahrzeuges erfolgen, eine automatische Öffnung der Heckklappe sollte jedoch vermieden werden und nur durch eine bewusste Handlung des Benutzers erfolgen können. Zur Durchführung dieser bewussten Handlung ist beispielsweise eine Betätigung eines Türgriffes oder die Betätigung des ID-Gebers notwendig. Dies ist jedoch oft für einen Benutzer sehr umständlich, wenn er beispielsweise schwere Gegenstände trägt, die er dann zunächst für eine Öffnung der Heckklappe ablegen muss.

Die Schrift DE 10 2008 021989 offenbart eine Fahrzeugzutrittsteuerung unter Verwendung eines auf den Boden projizierten Bedienfeldes, welches bei Annäherung an das Fahrzeug eines autorisierten ID-Gebers aktiviert wird.

Es ist daher die Aufgabe der vorliegenden Erfindung, die voranstehend beschriebenen Nachteile zumindest teilweise zu beheben. Insbesondere ist es Aufgabe der vorliegenden Erfindung, eine vereinfachte und komfortable sowie sichere Aktivierung von Funktionen eines Fahrzeuges zu ermöglichen.

Die voranstehende Aufgabe wird gelöst durch eine Vorrichtung mit den Merkmalen des Anspruchs 1 und durch ein Verfahren mit den Merkmalen des Anspruchs 8. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die erfindungsgemäße Vorrichtung dient der Aktivierung einer Funktion eines Fahrzeuges, insbesondere eines Kraftfahrzeuges. Hierfür ist eine Holografievorrichtung zur Erzeugung einer für einen Benutzer sichtbaren holografischen Darstellung vorgesehen. Zudem weist die erfindungsgemäße Vorrichtung eine Kommunikationsvorrichtung zur Kommunikation mit einem mobilen ID-Geber für eine Authentifizierung des Benutzers auf. Weiter ist eine Detektionsvorrichtung zur Detektion einer Aktivierungshandlung des Benutzers an der holografischen Darstellung vorgesehen, wobei die holografische Darstellung in Abhängigkeit von der Authentifizierung des Benutzers und die Funktion in Abhängigkeit von der detektierten Aktivierungshandlung aktivierbar ist. Eine Annäherung des Benutzers wird dabei von einer Sensorvorrichtung delektiert, wobei dann ein Authentifizierungsvorgang initiiert wird. Nach einer positiven Authentifizierung des Benutzers durch die Kommunikationsvorrichtung wird das Fahrzeug entriegelt. Damit nun der Benutzer eine Funktion des Fahrzeuges, wie z. B. das Öffnen einer Heckklappe oder einer Tür aktivieren kann, ohne eine manuelle Bedienung z. B. eines Türgriffes oder des ID-Gebers durchführen zu müssen, werden nach der erfolgreichen Authentifizierung für den Benutzer sichtbare holografische Darstellungen durch die Holografievorrichtung erzeugt. Die holografischen Darstellungen besitzen dabei den Vorteil, dass sie intuitiv durch einen Benutzer zur Aktivierung von Funktionen genutzt werden können. Dabei bieten die holografischen Darstellungen eine realistische, dreidimensionale und räumliche Darstellung einer 3-D Szene bzw. von aufgezeichneten Objekten. Aufgrund dieser besonderen Eigenschaften der holografischen Darstellung wird sie von einem Benutzer mit besonderer Aufmerksamkeit wahrgenommen. Ferner kann die holografische Darstellung selbst als ein Eingabe- und/oder Steuerungsmittel für den Benutzer zur Durchführung von Aktivierungshandlungen dienen, wie im Folgenden noch ausführlich beschrieben wird. Der Ausdruck der Aktivierungshandlung, welche durch den Benutzer an der holografischen Darstellung erfolgt, bezieht sich dabei darauf, dass die räumlichen Eigenschaften der holografischen Darstellung die Aktivierungshandlung vorgeben und zur Durchführung der Aktivierungshandlung der Benutzer eine bewusste Handlung an der holografischen Darstellung durchführt. Dazu kann der Benutzer die holografische Darstellung subjektiv betätigen bzw. berühren. Die Betätigung bzw. Berührung erfolgt deshalb subjektiv, da dem durch die holografische Darstellung visualisiertem Objekt üblicherweise kein realer Ursprung im Raum zugeordnet werden kann (anders ist es beispielsweise bei einem Volumendisplay). Ebenfalls ist es denkbar, dass die holografische Darstellung wenigstens aus bestimmten Richtungen sichtbar ist. Dabei bildet die holografische Darstellung kein real vorhandenes Bedienfeld, sondern erzeugt lediglich dessen Illusion für den Benutzer. Der Benutzer nimmt dabei die holografische Darstellung in einem bestimmten Abstand zum Fahrzeug wahr, d. h. insbesondere das durch die holografische Darstellung visualisierte Objekt, und kann zur Betätigung (d. h. zur Durchführung der Aktivierungshandlung) z. B. sich der Position des Objektes annähern. Durch diese Aktivierungshandlung wird eine Funktion des Fahrzeuges, wie z. B. das Öffnen einer Tür, das Öffnen der Heckklappe, das Öffnen eines Kofferraumdeckels, das Schließen einer Tür, Heckklappe und/oder eines Kofferraumdeckels und/oder die Aktivierung einer Beleuchtung erfolgen. So kann die holografische Darstellung oder auch eine Mehrzahl von holografischen Darstellungen zur Aktivierung von verschiedenen Funktionen des Fahrzeuges dienen.

Zudem ist erfindungsgemäß vorgesehen, dass eine Sensorvorrichtung vorgesehen ist, wodurch eine bewusste Handlung, nämlich eine Annäherung des Benutzers innerhalb eines Überwachungsbereiches, detektierbar ist. Die Sensorvorrichtung kann dabei separat von der Detektionsvorrichtung ausgebildet sein oder auch die Detektionsvorrichtung zumindest teilweise umfassen. Es ist beispielsweise denkbar, dass die Sensorvorrichtung Sensoreinheiten, wie eine Kameraeinheit aufweist, welche ebenfalls von der Detektionsvorrichtung genutzt werden und weitere Sensoreinheiten wie beispielsweise einen kapazitiven Sensor aufweist, welcher z. B. ausschließlich von der Sensorvorrichtung zur Detektion einer Annäherung genutzt wird. Die Sensorvorrichtung kann dabei geeignet sein, innerhalb des Überwachungsbereiches eine bewusste Handlung des Benutzers zu detektieren. Die bewusste Handlung kann z. B. die Annäherung an einen Türgriff und/oder das Umgreifen eines Türgriffes sein, die Bewegung bzw. Berührung des Benutzers an eine bestimmte Position und/oder an einen bestimmten Sensor (z. B. einem Kicksensor am Heck des Fahrzeuges), ein bestimmtes Bewegungsmuster, eine bestimmte Geste des Benutzers und/oder ein bestimmtes Sprachkommando. Dagegen ist eine unbewusste Handlung eine (z. B. unbewusste) Annäherung an das Fahrzeug oder eine unbeabsichtigtes Berühren des Fahrzeuges. Bei einer unbewussten Handlung, wie z.B. der Annäherung, erfolgt beispielsweise keine Funktion des Fahrzeuges (wenn der sich annähernde Benutzer keinen mobilen ID-Geber mit sich führt, mit welchem eine positive Authentifizierung möglich ist) oder es erfolgt bei einer positiven Authentifizierung z. B. lediglich eine Entriegelung des Fahrzeuges und/oder eine Aktivierung der holografischen Darstellung. Um z. B. eine weitere Funktion, wie das Öffnen der Heckklappe und/oder einer Tür zu ermöglichen, ist eine bewusste Handlung, wie z. B. eine Aktivierungshandlung an der holografischen Darstellung durch den Benutzer notwendig. Hierdurch wird vermieden, dass durch ein unbeabsichtigtes Öffnen einer Tür und/oder Heckklappe, z. B. innerhalb einer Garage, das Fahrzeug beschädigt wird. Merkmale und Details, die im Zusammenhang mit einem Türgriff beschrieben werden, gelten dabei selbstverständlich auch für einen Heckgriff sowie umgekehrt. Merkmale und Details, die im Zusammenhang mit einer Tür des Fahrzeuges beschrieben sind, gelten dabei selbstverständlich auch für eine Heckklappe, für eine Schiebetür und/oder für einen Kofferraumdeckel, sowie jeweils umgekehrt.

Vorteilhafterweise kann im Rahmen der Erfindung vorgesehen sein, dass die Holografievorrichtung zumindest eine Lichtquelle zur Emission von Licht, eine Hologrammeinheit zur Modulation des emittierten Lichts und einen Ausgang zur Ausstrahlung des modulierten Lichts (des Wellenfeldes) aufweist. Die Lichtquelle kann dabei beispielsweise eine kohärente Lichtquelle wie ein Laser sein. Der Laser kann dabei beispielsweise ein Dauerstrichlaser oder ein Pulslaser sein und z. B. als Festkörperlaser, als Gaslaser oder als Diodenlaser ausgebildet sein. Eine derartige Lichtquelle, welche Licht mit einer hohen Kohärenzlänge ausstrahlt, hat den Vorteil, dass der holografische Aufbau stark vereinfacht werden kann. Ferner kann auch zumindest eine kostengünstigere Weißlichtquelle eingesetzt werden, welche beispielsweise als Halogenlampe oder Leuchtdiode ausgebildet sein kann. Zudem ist beispielsweise auch der Einsatz eines Faserlasers denkbar, wodurch der Platzbedarf der erfindungsgemäßen Vorrichtung stark verringert werden kann. Damit eine holografische Darstellung, d. h. ein definiertes Wellenfeld erzeugt werden kann, muss das von der Lichtquelle emittiertes Licht moduliert werden. Hierzu kann eine als holografische Platte ausgebildete Hologrammeinheit zum Einsatz kommen. Die Hologrammeinheit kann ferner als Transmissionshologramm oder als Reflektionshologramm dienen. Die Hologrammeinheit bzw. die holografische Platte umfasst dabei das Hologramm, welches die Informationen zur Modulation des Lichtes trägt. Das Hologramm moduliert dabei das Licht, von welchem es beleuchtet wird, insbesondere in der Art, dass die Intensität und Phase des Lichtes in einer Weise verändert werden, dass ein definiertes Wellenfeld entsteht. Das Hologramm enthält daher eine vordefinierte Intensitäts- und Phaseninformation, z. B. in der Form eines Interferenzmusters. Zur Aufzeichnung, d. h. zum Beschreiben der Hologramme können beispielsweise Fotolacke belichtet werden, wobei das Hologramm beispielsweise als Polymer ausgebildet sein kann. Ebenfalls kann es möglich sein, dass die Hologrammeinheit ein Plasmon-Hologramm aufweist. Somit kann es auch möglich sein, dass die Holografievorrichtung eine Plasmonholografie nutzt. Hierbei wird ein lichtempfindlicher Kunststoff z. B. mit dem Interferenzmuster, d. h. dem Hologramm beschrieben, wobei zur Erzeugung einer farbigen holografischen Darstellung z. B. jeweils drei monochrome Hologramme in den Farben rot, grün und blau aufgezeichnet werden. Ein solches Plasmon (Farb-) Hologramm kann beispielsweise auch durch Weißlicht rekonstruiert werden. Der Träger der Hologramme, d. h. z. B. die holografische Platte, wird anschließend z. B. mit einer Silberschicht bedampft. Da die holografische Platte beispielsweise eine Silberschicht aufweist, können bei dem Auftreffen der Lichtwellen evaneszente Lichtwellen auftreten und/oder z. B. in der Silberschicht Plasmawellen bzw. Plasmonen angeregt werden. Da z. B. eine gewellte Oberfläche der holografischen Platte vorgesehen ist, kann durch die entstandenen Plasmonen in definierter Weise Licht emittiert werden. Durch die Steuerung des Einfallswinkel kann ferner nur Licht mit bestimmten Wellenlängen emittiert werden, so dass die erzeugte holografische Darstellung aus den zuvor gespeicherten Farben (z. B. rot, grün und blau) erzeugt werden kann. Weiter ist es möglich, dass das Hologramm der Hologrammeinheit ein durch z. B. einen Computer erzeugtes Echtzeithologramm ist. Hierbei kann z. B. eine holografische Platte eingesetzt werden, welche z. B. zyklisch mit Intensitäts- und Phaseninformation bzw. mit einem Interferenzmuster beschrieben werden kann. Zum Beschreiben der holografischen Platte mit dem Hologramm kann beispielsweise ein Pulslaser genutzt werden. Durch Winkelmultiplexing können zudem auch mehrfarbige Farbhologramme auf der holografischen Platte geschrieben werden. Ein Echtzeithologramm, d. h. ein Hologramm dass mehrfach neu geschrieben werden kann, und damit veränderbare Intensitäts- und Phaseninformationen enthält, kann zudem auch durch Lichtmodulatoren realisiert werden. Dazu kann die Hologrammeinheit beispielsweise einen räumlichen Lichtmodulator (spatial light modulator, SLM) ein Plasmon-Phasenmodulator und/oder Metamaterial aufweisen. Ein räumlicher Lichtmodulator kann beispielsweise elektronisch und/oder optisch angesteuert werden, so dass bestimmte Bereiche z. B. lichtdurchlässig oder lichtundurchlässig geschaltet werden. Auf diese Weise kann die Intensität und/oder die Phase des Lichtes moduliert werden, um eine holografische Darstellung zu erzeugen. Ebenfalls ist es denkbar, dazu einen Plasmonphasenmodulator zu verwenden, welcher auf den Pockels-Effekt basiert. Für diesen Zweck kann die Hologrammeinheit ein nicht lineares Polymer aufweisen. Auf diese Weise ist eine sehr effiziente Modulation des Lichtes möglich.

Damit die Hologrammeinheit bzw. die holografische Platte mit dem von der Lichtquelle emittierten Licht beleuchtet werden kann, kann eine Lichtleitereinheit mit einem Transportmittel und/oder einem Beleuchtungsmittel vorgesehen sein. Das Transportmittel kann dabei z. B. eine Glasfaser, wie eine Multimode oder Monomodefaser sein. Ebenfalls ist es denkbar zum Transport des Lichtes und/oder zur Beleuchtung der Hologrammeinheit einen Plasmonen-Wellenleiter und/oder Metamaterial für das Beleuchtungsmittel zu nutzen, um so die optischen Eigenschaften des Transportmittels und/oder des Beleuchtungsmittels, wie z. B. den Einfallswinkel zur Beleuchtung der holografischen Platte, genau bestimmen zu können. Ebenfalls ist es denkbar, dass die Lichtleitereinheit ein Einkopplungsmittel, wie z. B. einen Prismenkoppler aufweist und zum Transport des Lichtes z. B. auch Kunststofflichtleiter (z. B. aus Polykarbonat oder Polymethylmethacrylat) aufweist. Somit sind ein effizienter, energie- und platzsparender Transport des Lichtes sowie eine zuverlässige Beleuchtung der holografischen Platte in definierter Weise möglich.

Es ist ferner erfindungsgemäß vorgesehen, dass eine Hologrammeinheit der Holografievorrichtung zur Erzeugung der holografischen Darstellung ein Hologramm aufweist, und insbesondere das Hologramm veränderbar ausgebildet ist. Das veränderbare Hologramm ist dabei beispielsweise ein Echtzeithologramm, welches z. B. durch einen räumlichen Lichtmodulator, einen Plasmonen-Phasenmodulator und/oder durch mit einem Hologramm beschreibbaren Metamaterial und/oder photorefraktiven Polymer erzeugt werden kann. Die Intensität- und/oder Phaseninformation des Hologramms der Hologrammeinheit ist dabei z. B. zeitlich, zyklisch, optisch und/oder elektronisch veränderbar. Alternativ kann es möglich sein, dass unveränderbare Hologramme genutzt werden. Zur Veränderung der holografischen Darstellung kann dann beispielsweise vorgesehen sein, dass die holografische Platte mit dem Hologramm z. B. durch eine Mechanik durch eine weitere holografische Platte mit einem anderen Hologramm ausgetauscht wird. Hierdurch ist ein kostengünstiger Aufbau der Holografievorrichtung möglich.

In einer weiteren Möglichkeit kann vorgesehen sein, dass eine Kontrolleinheit vorgesehen ist, wobei die Kontrolleinheit derart ausgebildet ist, dass durch die Kontrolleinheit das Hologramm der Hologrammeinheit bestimmbar ist, insbesondere gemäß einem vordefinierten Hologramm, wobei eine nicht-flüchtigen Speichereinheit das vordefinierte Hologramm umfasst. Die Kontrolleinheit kann dabei beispielsweise einen Prozessor, einen Mikroprozessor, einen Mikrocontroller oder dergleichen aufweisen und z. B. separat von der Fahrzeugelektronik oder integriert in der Fahrzeugelektronik ausgebildet sein. Zudem kann die Kontrolleinheit insbesondere elektrisch mit der nicht-flüchtigen Speichereinheit verbunden sein, wobei die nicht-flüchtige Speichereinheit beispielsweise als Flashspeicher, als Read-Only-Memory (ROM), als Electrically Erasable Programmable Read-only Memory (EEPROM), als SD-Speicher und/oder als Festplatte ausgebildet sein und dabei beispielsweise in der Kontrolleinheit integriert sein kann. Die nicht-flüchtige Speichereinheit kann zudem verschiedene Hologramme, d.h. Informationen über Intensität und Phase umfassen. Diese Informationen können von der Kontrolleinheit genutzt werden, um das Hologramm der Hologrammeinheit neu zu beschreiben. Dazu kann die Kontrolleinheit beispielsweise einen Lichtmodulator der Hologrammeinheit elektronisch ansteuern. So ist es beispielsweise auch denkbar, dass durch ein zyklisches neues Beschreiben des Hologramms der Hologrammeinheit bewegte holografische Darstellungen erzeugbar sind. Auch können durch das Beschreiben beliebiger Hologramme in die Hologrammeinheit beliebige Informationen, z. B. Fahrzeuginformationen, als holografische Darstellung visualisiert werden. Die nicht-flüchtige Speichereinheit kann dabei z. B. diese Informationen umfassen. Die Fahrzeuginformationen können z. B. Informationen über die Tankfüllung, Informationen über den Zustand einer Schließvorrichtung des Fahrzeuges durch den Benutzer definierbare Informationen, Informationen über den Zustand der Türen (z. B. geöffnet oder geschlossen) oder z. B. die Ziffern des Nummernschildes des Fahrzeuges sein. Weiter kann eine Auswerteeinheit in der Kontrolleinheit vorgesehen sein, welche die in der nicht-flüchtigen Speichereinheit gespeicherten Informationen ausliest, auswertet und in ein Hologramm (d. h. in die Intensitäts- und Phaseninformationen) umwandelt. Durch die Kontrolleinheit kann das Hologramm in die Hologrammeinheit beschrieben werden, so dass bei einer Beleuchtung der holografischen Platte durch das von der Lichtquelle emittierte Licht ein definiertes Wellenfeld entsteht, wodurch das zuvor beschriebene Hologramm rekonstruiert wird. Betrachtet anschließend ein Benutzer das definierte Wellenfeld, das durch diese Rekonstruktion entstanden ist, so sieht der Benutzer die holografische Darstellung als ein Objekt mit der Information, welche zuvor aus der nicht-flüchtigen Speichereinheit ausgelesen wurde. Dies hat den Vorteil, dass ein Benutzer schon außerhalb des Fahrzeuges über Fahrzeuginformationen wie die Tankfüllung oder einen beladenen Kofferraum informiert werden kann.

Vorteilhafterweise kann die Sensorvorrichtung und/oder die Detektionsvorrichtung zumindest einen Abstandssensor, eine Kameraeinheit, einen kapazitiven Sensor und/oder einen optischen Sensor aufweisen. Die Sensorvorrichtung dient dabei z. B. der Detektion einer Annäherung eines Objektes, wie den Benutzer des Fahrzeuges, wobei die Annäherung beispielsweise auch richtungsabhängig erfasst werden kann. So könnte beispielsweise ein optischer Sensor im Heck und/oder Seitenbereich des Fahrzeuges und/oder ein kapazitiver Sensor (z. B. in den Türgriffen und/oder im Heckgriff) dazu benutzt werden, bei Detektion der Annäherung einen Authentifizierungsvorgang mit dem Benutzer bzw. dem ID-Geber des Benutzers zu starten. Die Sensoren bzw. Sensoreinheiten der Sensorvorrichtung können vorzugsweise auch von der Detektionsvorrichtung zumindest teilweise genutzt werden, wobei die Detektionsvorrichtung beispielsweise auch separate eigene Sensoren aufweisen kann. Während von der Sensorvorrichtung ein definierter Überwachungsbereich insbesondere im Außenbereich und angrenzend zum Fahrzeug überwacht wird, kann die Detektionsvorrichtung innerhalb eines Detektionsbereiches (welcher sich z. B innerhalb des Überwachungsbereiches erstreckt) eine bewusste Handlung und/oder Aktivierungshandlung des Benutzers detektieren. Hierzu ist es denkbar, dass die Daten der Sensoreinheiten und/oder Detektionseinheiten der Detektionsvorrichtung, welche den Detektionsbereich überwachen, von z. B. einer Auswerteeinheit der Kontrolleinheit ausgewertet werden. Somit kann z. B. ein bestimmtes Bewegungsmuster z. B. durch Auswertung der Daten einer Kameraeinheit der Detektionsvorrichtung ermittelt werden. Hierdurch ist eine zuverlässige Detektion einer Aktivierungshandlung des Benutzers möglich.

Vorteilhafterweise kann vorgesehen sein, dass die Sensorvorrichtung und/oder die Detektionsvorrichtung an oder in zumindest einem Abstandssensor, einem Stoßfänger, einem Start/Stopp-Knopf (d. h. einen Taster zum Motorstart), einem Emblem, einer Griffleiste, einem Türgriff und/oder Heckgriff, einem Schweller, einem Nummernschild, im Bereich einer Schiebetür und/oder einer Kameraeinheit des Fahrzeuges angeordnet und/oder integriert ist. Demnach kann vorgesehen sein, dass die Sensorvorrichtung und/oder die Detektionsvorrichtung zumindest teilweise, d. h. z. B. auch nur einzelne Sensoreinheiten der Sensorvorrichtung und/oder der Detektionsvorrichtung, an oder in zumindest dem Abstandssensor, dem Stoßfänger, dem Start/Stopp-Knopf, dem Emblem, der Griffleiste, dem Türgriff und/oder dem Heckgriff, dem Schweller, dem Nummernschild, im Bereich der Schiebetür und/oder der Kameraeinheit des Fahrzeuges angeordnet und/oder integriert sind. Hierdurch ergibt sich eine platzsparende Unterbringung, wobei durch die Anordnung und/oder Integration der Sensorvorrichtung und/oder der Detektionsvorrichtung in oder an mehreren Bereichen des Fahrzeuges der Vorteil erzielt werden kann, dass ein möglichst großer Überwachungsbereich und/oder Detektionsbereich erfasst werden kann. So könnte beispielsweise der Abstandssensor als Sensoreinheit dienen, und weitere z. B. optische Sensoreinheiten im Bereich des Stoßfängers und/oder der Griffleiste, und/oder im Heckbereich des Fahrzeuges angeordnet sein. Eine Anordnung z. B. im Türgriff oder im Heckgriff hat den Vorteil, dass eine Annäherung z. B. einer Hand des Benutzers zum Öffnen des beweglichen Teils, z. B. der Tür und/oder der Heckklappe bzw. des Kofferraumdeckels zuverlässig bestimmt werden kann. Wenn die Kameraeinheit beispielsweise im Heckbereich des Fahrzeuges angeordnet ist, kann diese z. B. gleichzeitig als Rückfahrkamera und/oder Einparkhilfe und zur Detektion einer Aktivierungshandlung des Benutzers dienen.

Vorteilhafterweise kann vorgesehen sein, dass zumindest ein Ausgang der Holografievorrichtung an oder in zumindest einem Abstandssensor, einem Stoßfänger, einem Start/Stopp-Knopf, einem Emblem, einer Griffleiste, einem Türgriff und/oder Heckgriff, einem Schweller, einem Nummernschild, im Bereich einer Schiebetür und/oder einer Kameraeinheit des Fahrzeuges angeordnet und/oder integriert ist. Die Anordnung der Ausgänge der Holografievorrichtung an z. B. mehreren Bereichen am Fahrzeug hat den Vorteil, dass die holografische Darstellung auf unterschiedlichen Seiten des Fahrzeuges (z. B. Beifahrertür, Fahrertür, Heckbereich) erzeugt werden kann. Ferner könnte die holografische Darstellung auch weitere Funktionen aufweisen, z. B. zur Beleuchtung des Nummernschildes, als Vorfeldbeleuchtung z. B. im Bereich der Türen und/oder der Heckklappe, z. B. durch Projektion auf den Boden und/oder eine Anpassung des Erscheinungsbildes des Fahrzeuges bewirken.

Es ist beispielsweise denkbar, dass eine Fahrzeugdekoration, welches das wahrnehmbare Erscheinungsbild des Fahrzeuges anpasst, z. B. bei einem Stillstand des Fahrzeuges und/oder während der Fahrt durch die holografische Darstellung entsteht. Auch könnten in den beschriebenen Bereichen, z. B. am Stoßfänger oder am Emblem, mehrere Ausgänge vorgesehen sein, welche beispielsweise in unterschiedliche Richtungen eine holografische Darstellung erzeugen. Weiter könnten die Ausgänge der Holografievorrichtung z. B. auch im Bereich der Sensorvorrichtung und/oder der Detektionsvorrichtung, d. h. an oder in den entsprechenden Sensoreinheiten angeordnet und/oder integriert sein. Beispielsweise ist eine Anordnung oder Integration in der Kameraeinheit der Einparkhilfe denkbar oder auch in den Abstandssensoren an den Stoßfängern des Fahrzeuges. Auf diese Weise kann flexibel eine holografische Darstellung in unterschiedlichen Richtungen erzeugt werden.

Vorteilhafterweise kann vorgesehen sein, dass die Vorrichtung an einem Montagemodul zur einfachen Montage an dem Fahrzeug angeordnet ist, wobei das Montagemodul insbesondere geeignet ist, in einer Aufnahme im Bereich der Heckklappe und/oder eines Nummernschilds befestigt zu werden. Das Montagemodul kann dabei beispielsweise einen Träger aufweisen, an dem die Vorrichtung insbesondere mit der Holografievorrichtung durch Befestigungsmittel, wie Schrauben, z. B. lösbar befestigt ist. Zudem kann die Vorrichtung ggf. an dem Träger bzw. dem Montagemodul kraft- und/oder formschlüssig befestigt sein. Das Montagemodul mit der erfindungsgemäßen Vorrichtung kann z. B. kraft- und/oder formschlüssig in beispielsweise einer Ausnehmung im Bereich der Abstandssensoren, der Stoßfänger, dem Emblem, des Start/Stopp-Knopfes, der Griffleiste, des Türgriffes, des Heckgriffes, des Schwellers, des Nummernschildes im Bereich der Schiebetür und/oder der Kameraeinheit befestigt werden. Damit kann der Vorteil erzielt werden, dass die erfindungsgemäße Vorrichtung auch mittels eines Nachrüstsatzes nachträglich an dem Fahrzeug installiert werden kann.

Es ist ferner denkbar, dass eine Anzeigevorrichtung vorgesehen ist, wobei die Anzeigevorrichtung zumindest ein Anzeigeelement umfasst, wobei insbesondere die Anzeigeelemente Blinklichter, Bremsleuchten und/oder Scheinwerfer des Fahrzeuges sind. Es kann dabei vorgesehen sein, dass die holografische Darstellung aktiviert wird, wobei der Benutzer zur Aktivierung einer Funktion des Fahrzeuges eine Aktivierungshandlung an der holografischen Darstellung durchführen muss. Durch die Anzeigeelemente kann der Benutzer vorzugsweise auf die Aktivierungshandlung hingewiesen werden, wobei ihm beispielsweise auch eine Anweisung vermittelt werden kann. So ist es denkbar, dass z. B. der linke Blinker aufleuchtet, um den Benutzer darauf hinzuweisen, dass eine Bewegung in die angezeigte Richtung z. B. die Öffnung der Heckklappe bewirkt. Damit könnten beispielsweise auch unterschiedliche Anzeigeelementen unterschiedliche aktivierbare Funktionen des Fahrzeugs zugeordnet sein, so dass z. B. eine Annäherung an den rechten Blinker, beispielsweise die Öffnung der rechten Tür bewirkt.

In einer weiteren Möglichkeit kann vorgesehen sein, dass durch die Anzeigeelemente und/oder die holografische Darstellung Anweisungen für eine Aktivierungshandlung an den Benutzer signalisierbar sind. Die Anweisungen können beispielsweise derart signalisiert werden, dass eine Aktivierung des Anzeigenelementes und/oder der holografischen Darstellung als Aufforderung zur Bewegung in Richtung des Anzeigenelementes bzw. holografischen Darstellung verstanden werden soll, um so eine zugeordnete Funktion des Fahrzeuges zu aktivieren. Auf diese Weise kann durch die entsprechende Zuordnung von Funktionen zu den Anzeigeelementen und/oder zu den holografischen Darstellungen eine komfortable Ansteuerung der Funktionen realisiert werden.

Ebenfalls Gegenstand der Erfindung ist ein Verfahren zur Aktivierung einer Funktion eines Fahrzeuges, insbesondere eines Kraftfahrzeuges, mit einer Holografievorrichtung zur Erzeugung einer für einen Benutzer sichtbaren holografischen Darstellung und einer Kommunikationsvorrichtung zur Kommunikation mit einem mobilen ID-Geber für eine Authentifizierung des Benutzers, und einer Detektionsvorrichtung zur Detektion einer Aktivierungshandlung des Benutzers an der holografischen Darstellung, wobei die holografische Darstellung in Abhängigkeit von der Authentifizierung des Benutzers und die Funktion in Abhängigkeit von der detektierten Aktivierungshandlung aktiviert wird. Damit bringt das erfindungsgemäße Verfahren die gleichen Vorteile mit sich, wie sie ausführlich mit Bezug auf eine erfindungsgemäße Vorrichtung erläutert worden sind. Zudem kann das erfindungsgemäße Verfahren geeignet sein, eine erfindungsgemäße Vorrichtung zu betreiben.

Erfindungsgemäß ist dabei vorgesehen, dass die nachfolgenden Schritte durchgeführt werden:
a) Detektion einer Annäherung des Benutzers
b) Authentifizierung mit dem ID-Geber
c) Aktivierung einer ersten Funktion des Fahrzeuges und der holografischen Darstellung, falls die Authentifizierung positiv ist
d) Detektion einer Aktivierungshandlung des Benutzers an der holografischen Darstellung
e) Aktivierung einer zweiten Funktion des Fahrzeuges in Abhängigkeit zur detektierten Aktivierungshandlung.

Die Detektion der Annäherung des Benutzers erfolgt dabei durch die Sensorvorrichtung, wobei eine Sensoreinheit wie beispielsweise eine Kameraeinheit und/oder kapazitiver Sensor bei einer Annäherung eines Objektes die Kommunikationsvorrichtung zur Authentifizierung ansteuert. Dabei sendet die Kommunikationsvorrichtung z. B. ein Wecksignal aus, welches von dem ID-Geber z. B. ausschließlich innerhalb des Überwachungsbereiches empfangen werden kann. Das Wecksignal wird dabei beispielsweise über eine Funkverbindung in einem LF (Low Frequency) Frequenzbereich übertragen. Nach einem Empfang des Wecksignals kann der ID-Geber z. B. über dieselbe Funkverbindung und/oder über eine weitere Funkverbindung in z. B einem HF (High Frequency) Frequenzbereich und/oder über Bluetooth und/oder NFC (Near Field Communication) ein Antwortsignal an die Kommunikationsvorrichtung übertragen. Das Antwortsignal enthält dabei beispielsweise einen Sicherheitscode, welcher fahrzeugseitig mit einem vorgegebenen Code abgeglichen werden kann. Stimmen die beiden Codes überein, so ist die Authentifizierung positiv und es wird beispielsweise eine erste Funktion des Fahrzeuges aktiviert. Diese erste Funktion des Fahrzeuges kann beispielsweise eine Entriegelung der Schließvorrichtung des Fahrzeuges sein, wobei hierdurch beispielsweise eine Öffnung der Türen und/oder der Heckklappe möglich ist. Allerdings findet noch keine Aktivierung einer zweiten Funktion, wie beispielsweise das Öffnen der Türen oder der Heckklappe und/oder das Starten des Motors statt. Um auch eine zweite Funktion des Fahrzeuges zu aktivieren, muss der Benutzer zunächst an der holografischen Darstellung, weiche nach der Authentifizierung aktiviert wird, eine Aktivierungshandlung vornehmen. Dies kann beispielsweise eine subjektive Berührung der holografischen Darstellung und/oder die Annäherung in eine bestimmte Richtung und/oder ein bestimmtes Bewegungsmuster sein. Die Aktivierungshandlung wird beispielsweise von der Detektionsvorrichtung erfasst. Dies hat den Vorteil, dass eine intuitive Aktivierung von Funktionen des Fahrzeuges durch den Benutzer des Fahrzeuges möglich ist Erfindungsgemäß ist im Rahmen der Erfindung vorgesehen, dass die erste Funktion eine Funktion eines Sicherheitssystems des Fahrzeuges, nämlich eine Entriegelung des Fahrzeuges, und die zweite Funktion eine Funktion zum Öffnen eines beweglichen Teils des Fahrzeuges, nämlich einer Tür, einer Schiebetür und/oder einer Heckklappe ist. Dabei ist es denkbar, dass die zweite Funktion, wie beispielsweise das Öffnen des beweglichen Teils des Fahrzeuges, nach Detektion einer Aktivierungshandlung z. B. an der holografischen Darstellung durch die Aktivierung einer Antriebseinheit des Fahrzeuges bewirkt wird. So können beispielsweise als Antriebseinheit Motoren vorgesehen sein, welche z. B. elektronisch mit der Kontrolleinheit verbunden sind. Bei der Detektion der Aktivierungshandlung kann dann zur Aktivierung der zugeordneten Funktionen die entsprechende zugeordnete Aktivierungseinheit durch die Kontrolleinheit elektronisch angesteuert werden. Hierdurch wird dann beispielsweise das Öffnen der Tür und/oder das automatische Öffnen der Heckklappe ermöglicht. Auf diese Weise braucht ein Benutzer, welcher beispielsweise einen schweren Gegenstand trägt, die Heckklappe nicht selbst öffnen, wodurch ein sehr hoher Komfort erreicht wird.

In einer weiteren Möglichkeit kann vorgesehen sein, dass die holografische Darstellung automatisch nach einer Annäherung des Benutzers, nach einer Authentifizierung, nach der Aktivierung einer ersten Funktion des Fahrzeuges und/oder nach einer Betätigung des ID-Gebers durch den Benutzer aktiviert wird. Es ist beispielsweise denkbar, dass der Benutzer noch vor der Authentifizierung z. B. einen Knopf oder Taster an dem ID-Geber betätigt, um die holografische Darstellung zu aktivieren. Ebenfalls ist es denkbar, dass die holografische Darstellung automatisch nach dem Eintreten bestimmter Ereignisse, wie beispielsweise einer Annäherung eines Objektes, aktiviert wird. Auf diese Weise kann die holografische Darstellung für unterschiedlichste Funktionen genutzt werden.

Gemäß einer vorteilhaften Weiterbildung kann vorgesehen sein, dass die holografische Darstellung ausschließlich bei einer positiven Authentifizierung und/oder einer definierten bewussten Handlung des Benutzers, insbesondere einer Betätigung des ID-Gebers, eines definierten Bewegungsmusters und/oder einer Annäherung des Benutzers aktiviert wird. Eine bewusste Handlung des Benutzers kann dabei beispielsweise die Annäherung an einen bestimmten Bereich des Fahrzeuges und/oder die Berührung an z. B. ein Betätigungselement des Fahrzeuges, wie beispielsweise einem Türgriff und/oder einer Sensorfläche eines Sensors, sein. Dieser Sensor kann beispielsweise auch unterhalb eines Stoßfängers z. B. im Heckbereich des Fahrzeuges angeordnet sein, wodurch beispielsweise auch ein Fuß des Benutzers zur Aktivierung der holografischen Darstellung genutzt werden kann. Auf diese Weise kann eine flexible und komfortable Aktivierung der holografischen Darstellung ermöglicht werden.

Es ist ferner denkbar, dass die bewusste Handlung eine definierte Bewegung eines Körperteils des Benutzers insbesondere im Überwachungsbereich ist, wobei insbesondere das Körperteil ein Fuß und/oder eine Hand des Benutzers ist. Dabei ist insbesondere vorgesehen, dass der Überwachungsbereich durch die Sensorvorrichtung oder durch die Detektionsvorrichtung durch Sensoreinheiten überwacht wird, welche geeignet sind, eine solche definierte Bewegung zu erkennen.

Ebenfalls ist es denkbar, dass die Detektionsvorrichtung oder die Sensorvorrichtung zwischen einer Aktivierung durch einen Fuß und einer Aktivierung durch eine Hand des Benutzers unterscheiden können, so dass in Abhängigkeit des zur Aktivierung genutzten Körperteils eine Funktion des Fahrzeuges aktivierbar ist.

Erfindungsgemäß ist vorgesehen, dass die Aktivierungshandlung eine bewusste Handlung im Bereich eines Detektionsbereiches ist, insbesondere eine subjektive Berührung einer holografischen Darstellung durch den Benutzer. Im Unterschied zu einer bewussten Handlung können für eine Aktivierungshandlung noch weitere Bedingungen und Voraussetzungen gegeben sein. So ist es erfindungsgemäß vorgesehen, dass die Aktivierungshandlung ausschließlich eine subjektive Interaktion mit der holografischen Darstellung ist. Zur Detektion und Interpretation der Aktivierungshandlung ist daher notwendig, dass ein Abgleich der aktivierten holografischen Darstellung mit der bewussten Handlung bzw. Bewegung des Benutzers erfolgt. Hierzu kann beispielsweise eine Kameraeinheit der Detektionsvorrichtung die Bewegung des Benutzers erfassen, und z. B. in einem ersten Schritt bestimmen, ob es sich um eine bewusste Handlung handelt, und im zweiten Schritt bestimmen, ob und welche Interaktion mit der holografischen Darstellung erfolgt. Wird eine Aktivierungshandlung, d. h. eine auf eine Aktivierung einer Funktion des Fahrzeuges gerichtete Handlung an der holografischen Darstellung erkannt, so kann die erfolgreiche

Erkennung dem Benutzer mitgeteilt bzw. bestätigt werden. Dies ist z. B. dann sinnvoll, wenn die ausgelöste Funktion des Fahrzeuges nach der Erkennung der entsprechenden Aktivierungshandlung nicht unmittelbar für den Benutzer sichtbar ist (wie z. B. eine Aktivierung der Fahrzeugelektronik, bestimmter Komponenten der Fahrzeugelektronik, ein Ver- und/oder Entriegeln und/oder ein Starten des Motors). Die Bestätigung kann beispielsweise durch eine Aktivierung der Anzeigenelemente der Anzeigevorrichtung des Fahrzeuges erfolgen oder z. B. durch weitere Signalisierungseinheiten des Fahrzeuges. Diese Signalisierungseinheiten können beispielsweise auch geeignet sein, neben der visuellen noch weitere Sinneswahrnehmungen des Benutzers anzusprechen. Die Signalisierungseinheiten können dabei im Zusammenspiel mit den holografischen Darstellungen z. B. noch für eine weitaus realistischere Wahrnehmung der Szene durch den Benutzer führen.

Ferner ist es denkbar, dass der Detektionsbereich durch definierte Positionen, insbesondere innerhalb des Überwachungsbereichs, vorgegeben ist, wobei insbesondere die Position der holografischen Darstellung und die Position eines zugeordneten Detektionsbereichs im Wesentlichen identisch sind. Da eine Aktivierungshandlung beispielsweise eine Interaktion des Benutzers mit der holografischen Darstellung ist, muss zur Detektion dieser Interaktion die Position bzw. subjektive Position der holografischen Darstellung für den Benutzer bekannt und auswertbar sein. Soll zur Aktivierung durch die Aktivierungshandlung beispielsweise die holografische Darstellung berührt werden, so muss eine Annäherung des Benutzers an die subjektive Position der holografischen Darstellung erkannt werden. Auf diese Weise ist eine zuverlässige Auswertung der Aktivierungshandlung, z. B. durch die Kontrolleinheit und/oder der Detektionsvorrichtung möglich.

Gemäß einem weiteren Vorteil kann vorgesehen sein, dass zumindest ein Detektionsbereich zumindest einer holografischen Darstellung und zumindest einer Funktion des Fahrzeuges zugeordnet sind, sodass eine Aktivierungshandlung des Benutzers, insbesondere die subjektive Berührung einer holografischen Darstellung, eine zugeordnete Funktion auslöst. Eine Aktivierungshandlung kann dabei z. B. auch eine subjektive Berührung der holografischen Darstellung durch den Benutzer und/oder das Eintreten in den Detektionsbereich, welches der holografischen Darstellung zugeordnet ist, insbesondere für eine definierte Dauer sein. Die Dauer wird dabei z. B. von einem Zeitgeber vorgegeben und nach dem Erreichen der erforderlichen Dauer kann die erfolgreich durchgeführte Aktivierungshandlung z. B. durch eine Anzeigevorrichtung bzw. Anzeigeeinheiten dem Benutzer signalisiert werden. Es ist daher denkbar, dass auch mehrere holografische Darstellungen erzeugt werden können, welche jeweils bestimmte Detektionsbereiche für Aktivierungshandlungen aufweisen, wobei den unterschiedlichen Aktivierungshandlungen an den unterschiedlichen holografischen Darstellungen jeweils bestimmte Funktionen des Fahrzeuges zugeordnet sind. Z. B. kann durch eine erste Aktivierungshandlung an einer ersten holografischen Darstellung eine erste Funktion und durch eine zweite Aktivierungshandlung an einer zweiten holografischen Darstellung eine zweite Funktion des Fahrzeuges aktiviert werden. Ebenfalls kann vorgesehen sein, dass z. B. jede Tür (und damit z. B. auch die Heckklappe) des Fahrzeuges eine eigene Aktivierungshandlung zur Öffnung aufweist. Somit kann eine komfortable Steuerung von Funktionen des Fahrzeuges erfolgen.

Vorteilhafterweise kann im Rahmen der Erfindung vorgesehen sein, dass durch eine Betätigung des ID-Gebers ein, insbesondere für einen definierten Zeitraum aktiviertes, Triggersignal erzeugt wird, das nach einer Authentifizierung automatisch eine Aktivierung der holografischen Darstellung bewirkt. Hierdurch wir der Vorteil erzielt, dass auch schon vor einer Authentifizierung und/oder einer Annäherung an das Fahrzeug, der Benutzer vormerken kann, dass eine holografische Darstellung nach der Authentifizierung und/oder der Annäherung des Benutzers aktiviert werden soll. Dies ist beispielsweise sinnvoll, wenn der Benutzer schwere Gegenstände zum Fahrzeug tragen und in den Kofferraum legen will. Da die Authentifizierung automatisch bei der Annäherung und Erkennung des richtigen ID-Gebers erfolgt, muss der Benutzer hierfür nicht den schweren Gegenstand, welchen er trägt, abstellen. Um jedoch z. B. den Kofferraum bzw. die Heckklappe zu öffnen, ist es ggf. notwendig, die holografische Darstellung zu aktivieren. Damit diese bei der entsprechenden Annäherung auch angezeigt wird, kann der Benutzer zuvor, schon vor dem Aufnehmen des schweren Gegenstandes und vor der Authentifizierung den ID-Geber betätigen, so dass das Triggersignal erzeugt wird, welches die automatische Aktivierung der holografischen Darstellung nach der Authentifizierung bewirkt. Somit ist nach der Annäherung bzw. Authentifizierung zur Aktivierung der holografischen Darstellung keine weitere Betätigung des ID-Gebers notwendig.

Gemäß einem weiteren Vorteil kann vorgesehen sein, dass die holografische Darstellung in einer definierten Distanz von dem Fahrzeug, insbesondere im Heckbereich des Fahrzeuges erzeugt wird, wodurch insbesondere eine Distanzinformation zu dem Fahrzeug für Benutzer nachfolgender Fahrzeuge sichtbar sind. Ein zu dichtes Auffahren nachfolgender Fahrzeuge stellt im Straßenverkehr ein ernsthaftes Gefahrenpotential dar. Daher kann z. B. vorgesehen sein, dass durch die Sensorvorrichtung der Abstand z. B. durch Abstandssensoren im Heckbereich des Fahrzeuges zu nachfolgenden Fahrzeugen detektiert wird. Unterschreitet der Abstand einen bestimmten Grenzwert, so kann beispielsweise eine holografische Darstellung aktiviert werden, welche den zu geringen Abstand signalisiert. Ebenfalls ist es denkbar, dass die definierte Distanz, in welcher der holografischen Darstellung im Heckbereich des Fahrzeuges erzeugt wird, der erforderlichen Distanz für einen sinnvollen Sicherheitsabstand entspricht.

Vorteilhafterweise kann im Rahmen der Erfindung vorgesehen sein, dass die holografische Darstellung situationsabhängig aktiviert wird, insbesondere als Abstandssignal, wenn der Abstand zu einem nachfolgenden Fahrzeug eine definierte Distanz unterschreitet, und/oder als Warnhinweis, wenn ein drohender Unfall detektiert und/oder eine Warnblinkanlage des Fahrzeuges aktiviert wird, und/oder als Anzeige für eine definierte und/oder von dem Benutzer bestimmte Information, und/oder als Ortungssignal, insbesondere bei einer Betätigung des ID-Gebers und/oder in einem Notfall und/oder bei einem Entriegeln des Fahrzeuges. Durch die situationsabhängige Aktivierung der holografischen Darstellung kann ein sehr sinnvoller Einsatz der holografischen Darstellung bzw. der Holografievorrichtung des Fahrzeuges erfolgen, da die holografische Darstellung eine sehr hohe Signalwirkung besitzen kann. So kann die holografische Darstellung beispielsweise als Unterstützung zur Warnung von nachfolgenden Fahrzeugen dienen, wenn die Warnblinkanlage des Fahrzeuges durch den Benutzer aktiviert wurde. Bei dem Aktivieren der Warnblinker kann z. B. automatisch eine holografische Darstellung, z. B. als Darstellung eines Warndreiecks aktiviert werden. Weiter können ggf. auch weitere Informationen durch die holografische Darstellung visualisiert werden, z. B. definierbare Texte oder Wörter. Auch ist es denkbar, dass durch Abstandssensoren der Sensorvorrichtung durch eine zu schnelle und zu große Verringerung des Abstandes ein drohender Unfall detektiert werden kann. Ferner ist es denkbar, dass durch die Sensorvorrichtung und/oder eine Kontrolleinheit des Fahrzeugs und/oder durch die Kommunikationsvorrichtung und/oder durch die Detektionsvorrichtung die holografische Darstellung situationsabhängig aktiviert und/oder verändert wird.

Ferner ist es denkbar, dass durch die Sensorvorrichtung und/oder die Detektionsvorrichtung der Abstand zu Objekten, insbesondere nachfolgenden Fahrzeugen, und/oder ein Unfall detektiert wird, wobei insbesondere ein drohender Unfall detektiert wird. Dazu kann es möglich sein, dass z. B. ausschließlich während der Fahrt die Abstandssensoren des Fahrzeuges genutzt werden und/oder eine Kameraeinheit im Heckbereich des Fahrzeuges genutzt wird, um den Abstand zu nachfolgenden Fahrzeugen zu erkennen. Ebenfalls ist es denkbar, dass Abstandssensoren und/oder eine Kameraeinheit des Fahrzeuges im vorderen Bereich des Fahrzeugs genutzt wird, um den Abstand des Fahrzeuges zu vorausfahrenden Fahrzeugen zu delektieren. Als Abstandssensoren können dabei beispielsweise auch Ultraschallsensoren und Radarsensoren zum Einsatz kommen. In Abhängigkeit der gemessenen Werte der Sensorvorrichtung, der Abstandssensoren und/oder der Kameraeinheiten kann die holografische Darstellung aktiviert werden.

Vorteilhafterweise kann bei der Erfindung vorgesehen sein, dass bei einer Detektion des ID-Gebers im Überwachungsbereich ein Authentifizierungsvorgang durchführbar ist, wobei die Kommunikationsvorrichtung insbesondere ein pollendes System ist, und zyklisch ein Funksignal zur Detektion des ID-Gebers aussendet. Das regelmäßig ausgesendete Funksignal kann dabei von einem ID-Geber, welcher sich im Überwachungsbereich befindet, empfangen werden, der ID-Geber daraufhin z. B. ein Antwortsignal aussenden und der ID-Geber so detektiert werden. Als Vorteil ergibt sich hierbei, dass die Annäherung des Benutzers mit dem ID-Geber durch die Kommunikationsvorrichtung sehr zuverlässig durch die Kommunikationsvorrichtung erkannt werden kann. Ferner kann die Sensorvorrichtung einen Überwachungsbereich des Fahrzeuges derart überwachen, dass eine Annäherung eines Objektes, insbesondere des Benutzers, detektiert wird.

Außerdem ist es erfindungsgemäß vorgesehen, dass zur Erzeugung der holografischen Darstellung die nachfolgenden Schritte durchgeführt werden:
a) Emission von Licht von einer Lichtquelle
b) Beleuchtung einer Hologrammeinheit, insbesondere einer holografischen Platte
c) Modulation, insbesondere Intensitäts- und Phasenmodulation, des Lichts durch ein Hologramm der Hologrammeinheit, derart, dass ein Wellenfeld entsteht, das für den Benutzer als dreidimensionales Objekt, insbesondere beabstandet zum Fahrzeug, sichtbar ist.

Die Hologrammeinheit weist dabei ein Hologramm auf, welches z. B. ein Interferenzmuster enthält, das die Modulation des Lichtes bewirkt. Auf diese Weise kann eine sehr realistische Darstellung für einen Benutzer erzeugt werden.

Vorteilhafterweise kann im Rahmen der Erfindung vorgesehen sein, dass zur Authentifizierung mit dem ID-Geber durch die Kommunikationsvorrichtung ein Wecksignal an den ID-Geber kontaktlos übertragen wird, woraufhin der ID-Geber ein Antwortsignal mit einem Sicherheitscode an die Kommunikationsvorrichtung überträgt. Die Übertragung des Wecksignals von dem Fahrzeug an den ID-Geber und die Übertragung des Antwortsignals von dem ID-Geber an das Fahrzeug entspricht dabei insbesondere dem Authentifizierungsvorgang. Der ID-Geber kann dabei allein durch die Annäherung an das Fahrzeug, ohne dass eine Bedienung des Benutzers an dem ID-Geber erforderlich ist, eine Authentifizierung bewirken, so dass z. B. eine Entriegelung des Fahrzeugs erfolgen kann.

Es ist ferner denkbar, dass die Sensorvorrichtung und/oder die Detektionsvorrichtung eine optische Sensoreinheit aufweist, um einen Überwachungsbereich und/oder Detektionsbereich entstehen zu lassen, wobei die Sensoreinheit insbesondere gepulstes Licht und/oder Licht im nicht sichtbaren Bereich zur Detektion aussendet. Alternativ ist es z. B. auch denkbar, dass Ultraschallwellen zur Detektion der Sensorvorrichtung und/oder der Detektionsvorrichtung zum Einsatz kommen. So kann zuverlässig eine Überwachung des Überwachungsbereiches bzw. des Detektionsbereiches erzielt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1a bis 1b:: eine schematische Darstellung eines Fahrzeuges mit der erfindungsgemäßen Vorrichtung und Varianten der holografischen Darstellung,
- Fig. 2a bis 2d:: eine schematische Darstellung von Teilen der erfindungsgemäßen Vorrichtung,
- Fig. 3a bis 3d:: eine weitere schematische Darstellung von Teilen der erfindungsgemäßen Vorrichtung,
- Fig. 4a bis 4b:: eine schematische Darstellung einer Anordnung einer Holografievorrichtung der erfindungsgemäßen Vorrichtung an einem Emblem,
- Fig. 5:: eine weitere schematische Darstellung einer weiteren Anordnung der Holografievorrichtung an einem Türgriff,
- Fig. 6:: eine weitere schematische Darstellung einer weiteren Anordnung der Holografievorrichtung an einem Fahrzeug,
- Fig. 7 bis 8:: eine schematische Darstellung von Teilen einer erfindungsgemäßen Vorrichtung, insbesondere einer Holografievorrichtung,
- Fig. 9 bis 13:: weitere schematische Darstellungen der erfindungsgemäßen Vorrichtung mit verschiedenen holografischen Darstellungen,
- Fig. 14 bis 15:: eine weitere schematische Darstellung zur Visualisierung der Überwachungs- und Detektionsbereiche und
- Fig. 16 bis 18:: eine schematische Darstellung zur Visualisierung der Verfahrensschritte eines erfindungsgemäßen Verfahrens.

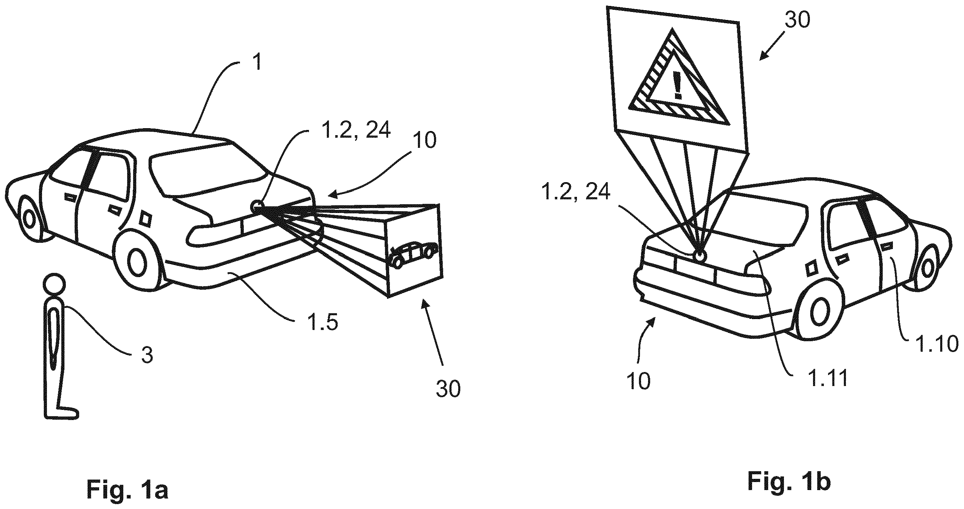

Figur 1a und 1b zeigen ein Fahrzeug 1 mit einer erfindungsgemäßen Vorrichtung 10, wobei ein Ausgang 24 einer Holografievorrichtung 20 der erfindungsgemäßen Vorrichtung 10 zu sehen ist. Der Ausgang 24 ist in dem gezeigten Ausführungsbeispiel in einem Emblem 1.2 des Fahrzeuges 1 angeordnet. Dabei ist es denkbar, dass ein weiterer Ausgang 24 und/oder eine weitere Holografievorrichtung 20 an der Vorderseite des Fahrzeuges 1 an einem weiteren Emblem 1.2 und/oder an weiteren Positionen des Fahrzeuges 1 angeordnet ist. So ist beispielsweise auch eine Anordnung im Bereich des Stoßfängers 1.5, an der Heckseite und/oder an der Vorderseite des Fahrzeuges 1 denkbar. In Figur 1a erzeugt die Holografievorrichtung 20 eine holografische Darstellung 30, welche für einen Benutzer 3 sichtbar ist. Dabei weist die holografische Darstellung 30 ein Symbol (hier ein Fahrzeug 1 mit geöffneten Kofferraumdeckel) auf, welches den Benutzer 3 auf die der holografischen Darstellung 30 und der entsprechenden Aktivierungshandlung zugeordneten Funktion 110 des Fahrzeuges 1 hinweist. So ist es denkbar, dass z. B. bei einer Interaktion des Benutzers 3 mit der holografischen Darstellung 30 die entsprechende Funktion 110 aktiviert wird und so z. B. das Öffnen des Kofferraumdeckels erfolgt. In Figur 1b ist dagegen eine holografische Darstellung 30 gezeigt, welcher keine Funktion 110 zugeordnet ist, sondern welche lediglich einen Warnhinweis z. B. für nachfolgende Fahrzeuge darstellt. Ebenfalls wird an den Beispielen deutlich, dass eine Erzeugung der holografischen Darstellung 30 in unterschiedliche Richtungen des Fahrzeuges 1 möglich ist.

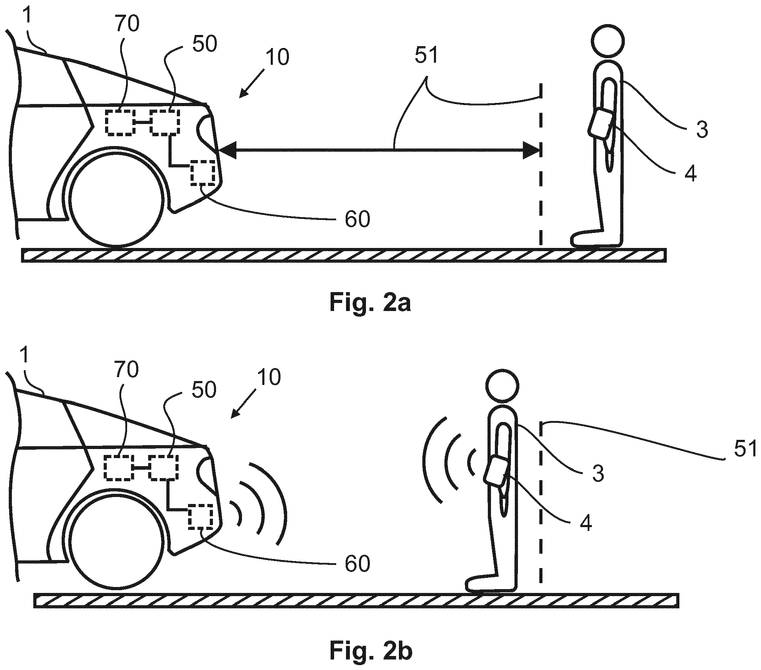

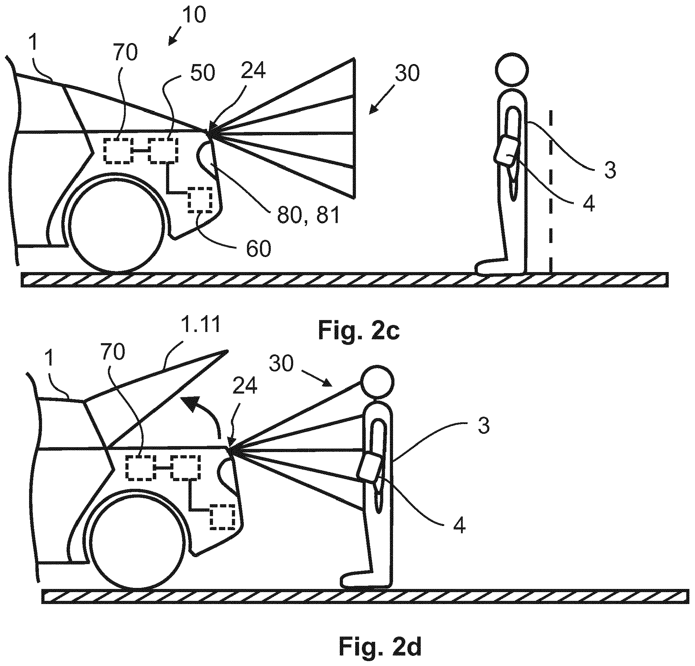

In den Figuren 2a bis 2d ist eine weitere Ausführungsvariante der erfindungsgemäßen Vorrichtung 10 gezeigt, wobei eine Detektionsvorrichtung 70, eine Sensorvorrichtung 50 sowie eine Kommunikationsvorrichtung 60 innerhalb des Fahrzeuges 1 z. B. im Heckbereich angeordnet sind. Dabei sind die Detektionsvorrichtungen 70, die Kommunikationsvorrichtung 60 und die Sensorvorrichtung 50 elektronisch miteinander verbunden. Die Sensorvorrichtung 50 erfasst dabei einen Überwachungsbereich 51, welcher durch einen Pfeil in Figur 2a dargestellt ist. Die Schwelle zum Überwachungsbereich 51 ist dabei in Figur 2a und 2b durch eine gestrichelte Linie dargestellt, wobei bei einem Eintreten des Benutzers 3 insbesondere mit einem ID-Geber 4 in den Überwachungsbereich 51 die Annäherung durch z. B. eine nicht dargestellte Sensoreinheit 50.1 im Heckbereich erfasst werden kann und ein Authentifizierungsvorgang mit dem ID-Geber 4 durch die Kommunikationsvorrichtung 60 ausgelöst werden kann. Dies ist in Figur 2b dargestellt. Erfolgt der in Figur 2b dargestellte Authentifizierungsvorgang mit der Kommunikationsvorrichtung 60 erfolgreich, d. h. ist die Authentifizierung positiv, wird wie in Figur 2c dargestellt ist, eine holografische Darstellung 30 durch die Holografievorrichtung 20 erzeugt. Das durch die Holografievorrichtung 20 erzeugte Lichtwellenfeld (Wellenfeld) 31, das die holografische Darstellung 30 erzeugt, wird durch einen Ausgang 24 der Holografievorrichtung 20 ausgestrahlt. Das Lichtwellenfeld 31 trifft dabei auf die Augen des Benutzers 3, welcher die Illusion eines Objektes der holografischen Darstellung 30 z. B. beabstandet von dem Fahrzeug 1 wahrnimmt. Nun kann der Benutzer 3 z. B. durch eine Anzeigevorrichtung 80 mit Anzeigeelementen 81 zur Interaktion mit der holografischen Darstellung 30 aufgefordert werden. Dies kann beispielsweise eine Berührung der holografischen Darstellung 30 sein, um eine Funktion 110 des Fahrzeuges 1 zu aktivieren. In Figur 2d ist daher gezeigt, dass der Benutzer 3 sich in Richtung der holografischen Darstellung 30 bewegt, d. h. an die Position an der der Benutzer 3 die holografische Darstellung 30 wahrnimmt. Dieser Position, d.h. insbesondere der Detektionsbereich 71 der Detektionsvorrichtung 70 wird von der Detektionsvorrichtung 70 bzw. von Sensoreinheiten 50.1 überwacht, wodurch eine Annäherung erkannt und die entsprechende Aktivierungshandlung ausgewertet werden kann. Da in Figur 2d durch die bewusste Handlung des Benutzers 3 eine Aktivierungshandlung erfolgt ist, wird die der holografischen Darstellung 30 zugeordnete Funktion 110 aktiviert. Dies ist im dargestellten Ausführungsbeispiel das Öffnen einer Heckklappe 1.11 des Fahrzeuges 1, wobei die Bewegung der Heckklappe 1.11 durch einen Pfeil in der Figur 2d dargestellt ist.

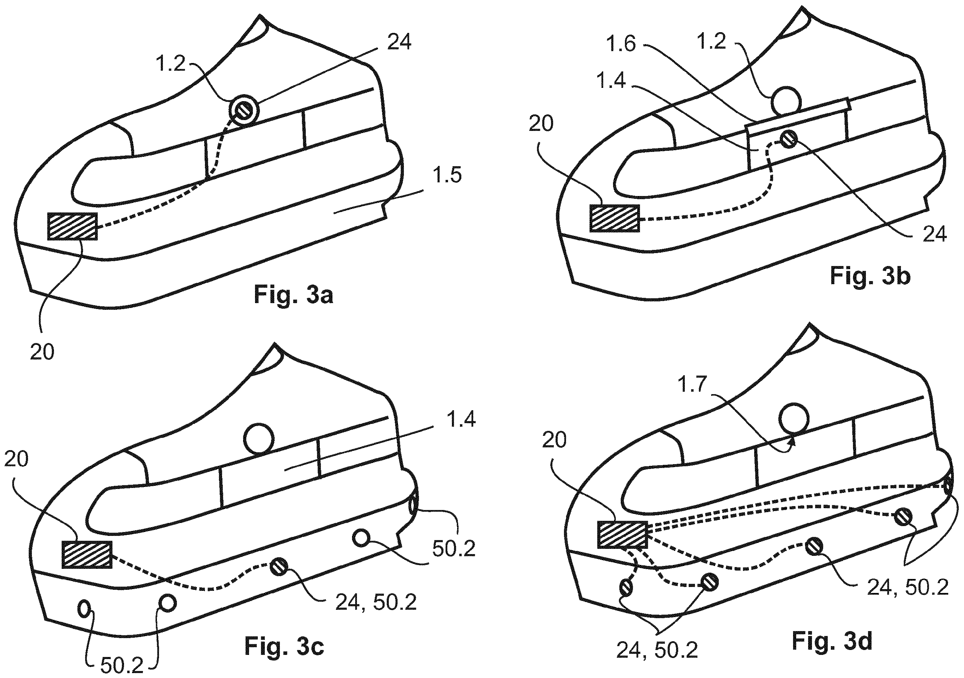

In den Figuren 3a bis 3d sind verschiedene Ausführungsbeispiele mit möglichen Anordnungen der Holografievorrichtung 20 dargestellt. Dabei kann z. B. eine Holografievorrichtung 20 mehrere Ausgänge 24 aufweisen, worüber Lichtwellenfelder 31 ausgestrahlt und somit verschiedene holografische Darstellungen 30 erzeugt werden. Auch ist es denkbar, dass die verschiedenen Ausgänge 24 und damit die verschiedenen Lichtwellenfelder 31 zur Darstellung z. B. einer holografischen Darstellung 30 oder einer holografischen Szene genutzt werden, wobei durch die Nutzung einer Mehrzahl an Ausgängen 24 z. B. die Komplexität der holografischen Szene erhöht werden kann. In Figur 3a ist der Ausgang 24 an einem Emblem 1.2 im Heckbereich des Fahrzeuges 1 angeordnet. In Figur 3b ist dagegen gezeigt, dass eine Anordnung des Ausganges 24 auch im Bereich des Nummernschildes 1.4 oder im Bereich der Griffleiste 1.6 sinnvoll sein kann, da hierbei z. B. auch eine Beleuchtung des Nummernschildes 1.4 durch die holografische Darstellung 30 möglich ist.

In Figur 3c ist dagegen der Ausgang 24 in einem Abstandssensor 50.2 der Sensorvorrichtung 50 integriert. Die Abstandssensoren 50.2 der Sensorvorrichtung 50 können dabei beispielsweise auch zur Überwachung des Überwachungsbereiches 51 zur Detektion einer Annäherung des Benutzers 3 genutzt werden. Auch ist es möglich, dass die Abstandssensoren 50.2 gleichzeitig zur Detektion der Aktivierungshandlung durch die Detektionsvorrichtung 70 innerhalb des Detektionsbereiches 71 genutzt werden. Auch können mehrere Ausgänge 24 z. B. an unterschiedlichen Abstandssensoren 50.2 angeordnet sein, wie in Figur 3d dargestellt und/oder integriert ist.

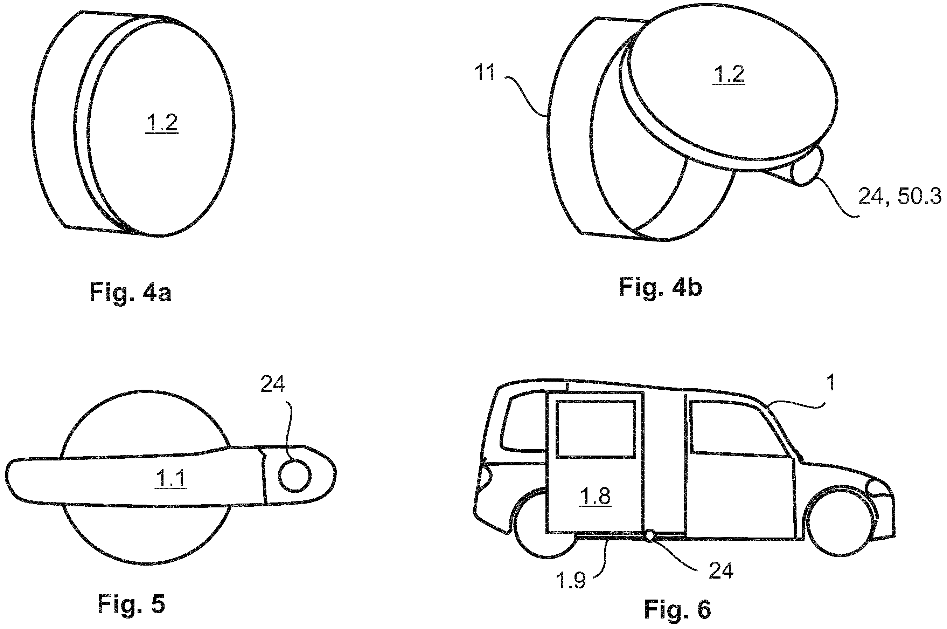

In Figur 4a bis 4b ist ein Emblem 1.2 des Fahrzeuges 1 an einem Montagemodul 11 in vergrößerter Darstellung gezeigt. Dabei ist es möglich, dass das Emblem 1.2 wie in Figur 4b dargestellt ist, z. B. durch eine Antriebseinheit des Fahrzeuges 1 aufgeklappt und/oder verschwenkt werden kann. Ein Ausgang 24 der Holografievorrichtung 20 kann dabei auf der Innenseite des Emblems 1.2 angeordnet sein, z. B. an oder integriert in einer Kameraeinheit 50.3.

In Figur 5 ist ein Türgriff 1.1 des Fahrzeuges 1 gezeigt, wobei hier der Ausgang 24 der Holografievorrichtung 20 im Bereich z. B. eines Schlüsselloches angeordnet ist. Hierdurch können holografische Darstellungen 30 auch im Seitenbereich des Fahrzeuges 1 erzeugt werden.

In Figur 6 ist schematisch eine Seitenansicht des Fahrzeuges 1 gezeigt, wobei das Fahrzeug 1 eine Schiebetür 1.8 aufweist, mit einem Schweller 1.9. Der Ausgang 24 der Holografievorrichtung 20 ist dabei an den Schweller 1.9 angeordnet. Eine so erzeugte holografische Darstellung 30 kann beispielsweise auch zur Vorfeldbeleuchtung im Seitenbereich des Fahrzeuges 1 genutzt werden.

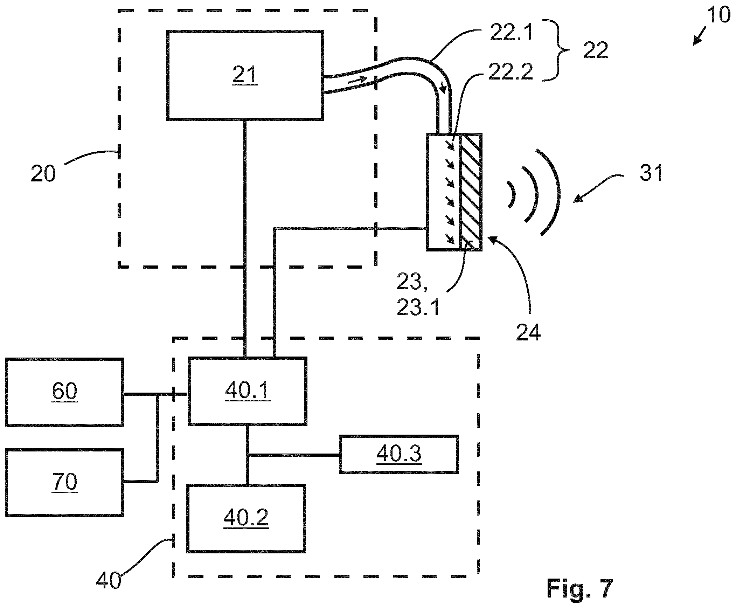

In Figur 7 ist schematisch ein Aufbau gemäß eines ersten Ausführungsbeispiels der erfindungsgemäßen Vorrichtung 10 gezeigt. Dabei ist insbesondere die Holografievorrichtung 20 gezeigt, welche eine Lichtquelle 21 aufweist, die über eine Lichtleitereinheit 22 mit einer Hologrammeinheit 23 verbunden ist. Das von der Lichtquelle 21 emittierte Licht, welches durch Pfeile angedeutet ist, kann dabei durch ein Transportmittel 22.1 und ein Beleuchtungsmittel 22.2 der Lichtleitereinheit 22 geleitet werden. Das Transportmittel 22.1 ist dabei beispielsweise als Glasfaser ausgebildet, wobei das Beleuchtungsmittel 22.2 beispielsweise ein Einkoppelelement, ein Prisma, ein Plasmon-Wellenleiter oder dergleichen sein kann, um eine definierte Beleuchtung der Hologrammeinheit 23 zu erzielen. Die Hologrammeinheit 23 weist dabei eine holografische Platte 23.1 auf, welche das von der Lichtquelle 21 emittierte Licht moduliert, wobei das durch die Modulation erzeugte Wellenfeld 31 mit definierten Intensitäts- und Phaseneigenschaften aus dem Ausgang 24 ausgestrahlt und so die holografische Darstellung 30 erzeugt. Das Hologramm der holografischen Platte 23.1 bzw. der Hologrammeinheit 23 und/oder der Lichtquelle 21 kann dabei unveränderbar sein, wobei in diesem Fall unterschiedliche holografische Darstellungen 30 z. B. durch einen Austausch des Hologramms erzeugt werden können. Ferner ist es denkbar, dass das Hologramm der holografischen Platte 23.1 bzw. der Hologrammeinheit 23 auch veränderbar ausgestaltet ist, und z. B. durch eine Kontrolleinheit 40 mit einer Auswerteeinheit 40.1 gesteuert werden kann. Dazu kann die Auswerteeinheit 40.1 elektronisch mit der Hologrammeinheit 23 verbunden sein, wobei die Auswerteeinheit 40.1 z. B. einen räumlichen Lichtmodulator der Hologrammeinheit 23 ansteuert. Damit ein bestimmtes Hologrammabbild in die Hologrammeinheit 23 geladen wird, kann die Auswerteeinheit 40.1 das vordefinierte Hologrammabbild z. B. aus einer nicht-flüchtigen Speichereinheit 40.2 auslesen und an die Hologrammeinheit 23 übertragen. Ferner ist es auch möglich, dass die holografische Darstellung 30 durch die Fahrzeugelektronik 1.12 z. B. über eine Schnittstelleneinheit 40.3 der Kontrolleinheit 40 gesteuert wird. Ebenfalls kann die Kontrolleinheit 40 dazu dienen, die holografische Darstellung 30 zu aktivieren oder zu deaktivieren. Dazu kann die Kontrolleinheit 40 z. B. mit der Kommunikationsvorrichtung 60 und mit der Detektionsvorrichtung 70 verbunden sein, um z. B. eine Aktivierungshandlung zu erkennen oder eine positive Detektion übermittelt zu bekommen.

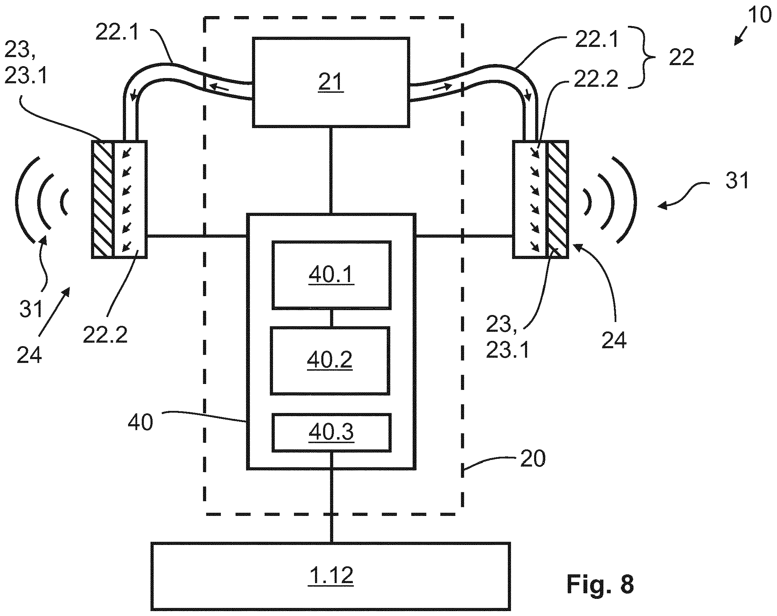

In Figur 8 ist schematisch ein weiteres Ausführungsbeispiel der erfindungsgemäßen Vorrichtung 10 und insbesondere der Holografievorrichtung 20 gezeigt. Dabei weist die Holografievorrichtung 20 die Auswerteeinheit 40.1, eine nicht-flüchtige Speichereinheit 40.2 sowie eine Schnittstelleneinheit 40.3 auf. Ferner ist die Schnittstelleneinheit 40.3 mit einer Elektronik 1.12 des Fahrzeuges 1 verbunden. Da es möglich sein kann, dass die Holografievorrichtung 20 mehrere Ausgänge 24 aufweist, ist in Figur 8 beispielhaft ein weiterer Ausgang 24 dargestellt, wobei eine weitere Hologrammeinheit 23 von der Auswerteeinheit 40.1 angesteuert wird. Durch den kompakten Aufbau der Holografievorrichtung 20, in welcher die Kontrolleinheit 40 mit der Auswerteeinheit 40.1, der nicht-flüchtigen Speichereinheit 40.2 und der Schnittstelleneinheit 40.3 integriert ist, ist ein flexibler und einfacher Einbau der Holografievorrichtung 20 z. B. an einem Montagemodul 11 an dem Fahrzeug 1 möglich.

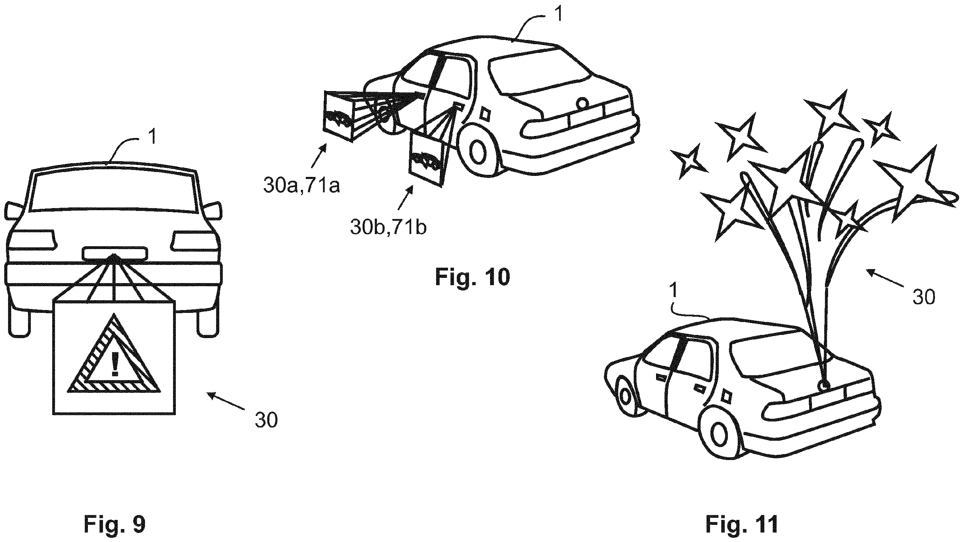

In Figur 9 ist eine beispielhafte Anwendung einer holografischen Darstellung 30 gezeigt, welche beispielsweise als Abstandssensor zu einem nachfolgenden Fahrzeug 1 dienen kann.

In Figur 10 ist ein weiteres Anwendungsbeispiel der holografischen Darstellung 30 gezeigt, wobei auch eine erste holografische Darstellung 30a und eine zweite holografische Darstellung 30b genutzt werden kann, welche einem ersten Detektionsbereich 71a und einem zweiten Detektionsbereich 71b zugeordnet sind. Bei einer Aktivierungshandlung im Bereich des ersten Detektionsbereiches 71a kann dabei beispielsweise die Fahrertür und bei einer Aktivierungshandlung im Bereich des zweiten Detektionsbereiches 71b kann beispielsweise eine zweite Tür des Fahrzeuges 1 geöffnet werden.

In Figur 11 ist eine weitere Anwendung der holografischen Darstellung 30 gezeigt, wobei beispielsweise bei einer Bedienung des ID-Gebers 4 durch den Benutzer 3 zum leichteren Auffinden des Fahrzeuges 1 eine holografische Darstellung 30 oberhalb des Fahrzeuges 1 erzeugt werden kann.

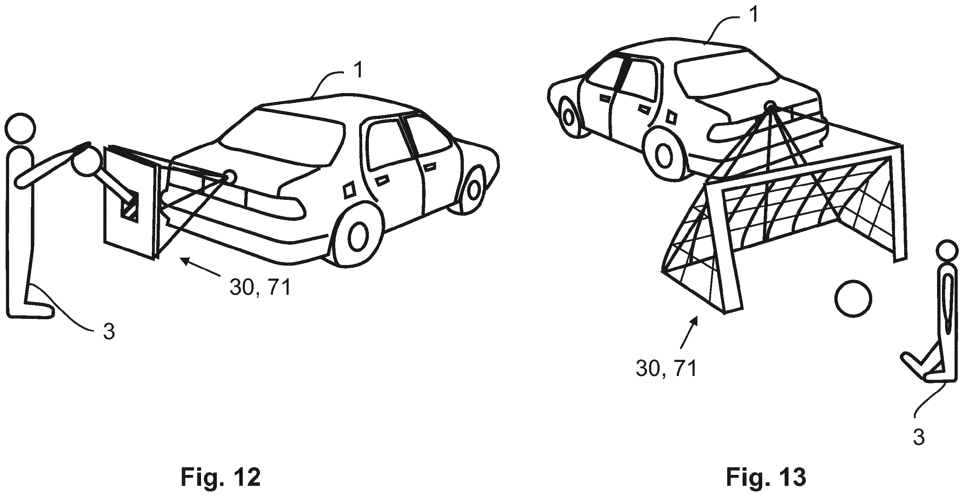

In Figur 12 ist gezeigt, dass eine Aktivierungshandlung des Benutzers 3 z. B. auch in der Art eines bestimmten Bewegungsmusters an der holografischen Darstellung 30 erfolgen kann. Dies kann beispielsweise eine bestimmte Geste sein, wobei die holografische Darstellung 30 den Benutzer 3 auf die Art der Geste aufmerksam macht, welche zur Durchführung der Aktivierungshandlung erforderlich ist.

In Figur 12 ist dies beispielsweise eine Aktivierungshandlung, welche eine Bewegung der Hand des Benutzers 3 erfordert. In Figur 13 ist dagegen zur Durchführung der Aktivierungshandlung eine Bewegung eines Fußes des Benutzers 3 notwendig, worauf die holografische Darstellung 30 in Form eines Tores mit einem Ball hinweist. Die Berührung des Balles kann dabei zur Aktivierung der Funktion 110 des Fahrzeuges 1 führen.

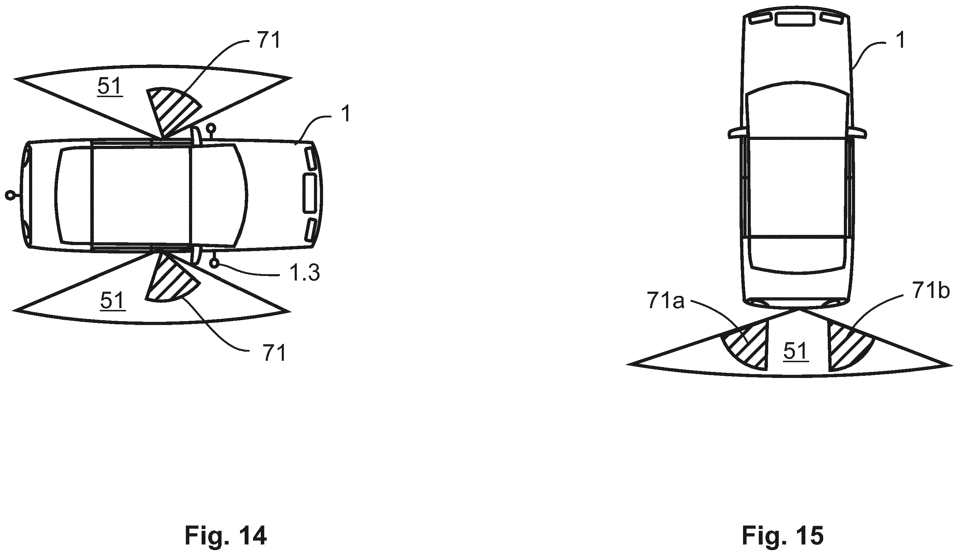

In Figur 14 sind die seitlichen Überwachungsbereiche 51 des Fahrzeuges 1 dargestellt, wobei auch weitere Überwachungsbereiche 51 vorgesehen sein können. Innerhalb des Überwachungsbereiches 51, welcher durch die Sensorvorrichtung 50 erfasst wird, ist zudem ein Detektionsbereich 71 vorgesehen, welcher von der Detektionsvorrichtung 70 überwacht wird. Zudem kann beispielsweise die Kommunikationsvorrichtung 60 auch eine Antenne 1.3 aufweisen, um ebenfalls einen Überwachungsbereich 51 zu überwachen bzw. die Annäherung eines ID-Gebers 4 zu detektieren.

In Figur 15 ist dagegen der Überwachungsbereich 51 im Heckbereich des Fahrzeuges 1 dargestellt, wobei der Überwachungsbereich 51 auch mehrere Detektionsbereiche 71 aufweisen kann. Im dargestellten Beispiel ist ein erster Detektionsbereich 71a und ein zweiter Detektionsbereich 71b vorgesehen, welche z. B. von separaten Sensoreinheiten 50.1 der Detektionsvorrichtung 70 überwacht werden können. Es ist z. B. denkbar, dass in jedem Detektionsbereich 71 eine holografische Darstellung 30 erzeugt wird, welche durch den Benutzer 3 durch eine Aktivierungshandlung aktiviert werden können.

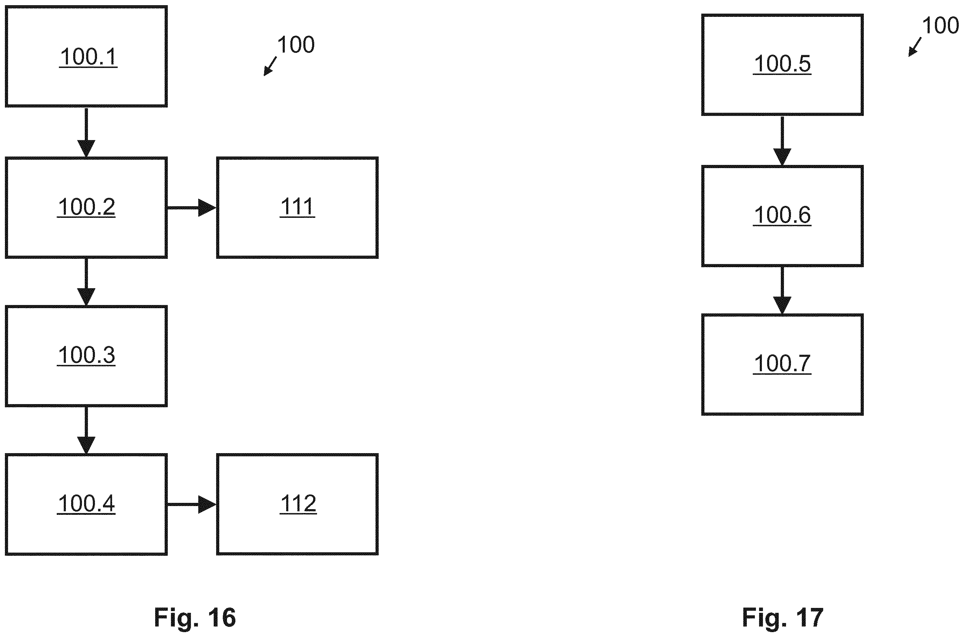

In Figur 16 ist eine schematische Darstellung zur Visualisierung des erfindungsgemäßen Verfahrens 100 gezeigt. Gemäß einem ersten Verfahrensschritt 100.1 folgt dabei die Detektion einer Annäherung eines Objektes, insbesondere des Benutzers 3, wobei nach erfolgreicher Detektion der Annäherung als zweiter Verfahrensschritt 100.2 eine Authentifizierung mit dem ID-Geber 4 erfolgt. Ist die Authentifizierung positiv, so wird eine erste Funktion 111 des Fahrzeuges 1 aktiviert und es wird ein dritter Verfahrensschritt 100.3 durchgeführt. Als dritter Verfahrensschritt 100.3 erfolgt dabei die Erzeugung einer holografischen Darstellung 30, welche durch eine Aktivierungshandlung des Benutzers 3 bedient werden kann. Wird eine solche Aktivierungshandlung im vierten Verfahrensschritt 100.4 detektiert, so kann eine zweite Funktion 112 durchgeführt werden.

In Figur 17 sind weitere Verfahrensschritte eines erfindungsgemäßen Verfahrens 100 visualisiert. Dabei ist die Erzeugung einer holografischen Darstellung 30 dargestellt, wobei als fünfter Verfahrensschritt 100.5 Licht einer Lichtquelle 21 einer Holografievorrichtung 20 emittiert wird. Als sechster Verfahrensschritt 100.6 erfolgt dabei die Beleuchtung einer Hologrammeinheit 23 und als siebter Verfahrensschritt 100.7 die Modulation des emittierten Lichtes zur Erzeugung der holografischen Darstellung 30.

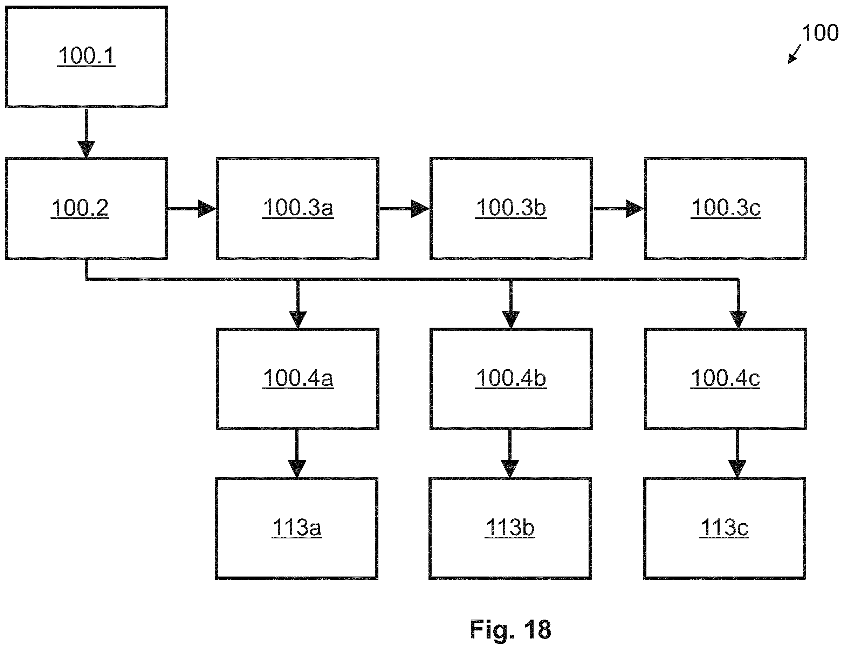

In Figur 18 sind weitere Verfahrensschritte des erfindungsgemäßen Verfahrens 100 dargestellt. Dabei erfolgt als erster Verfahrensschritt 100.1 eine Detektion einer Annäherung, als zweiter Verfahrensschritt 100.2 eine Authentifizierung, wobei bei positiver Authentifizierung eine erste 100.3a, eine zweite 100.3b und eine dritte holografische Darstellung 100.3c erzeugt werden. Jeder der holografischen Darstellungen sind unterschiedliche Aktivierungshandlungen und Funktionen zugeordnet. Bei der Detektion einer ersten Aktivierungshandlung 100.4a erfolgt dabei die Aktivierung einer ersten zugeordneten Funktion 113a, bei der Detektion einer zweiten Aktivierungshandlung 100.4b erfolgt dabei die Aktivierung einer zweiten zugeordneten Funktion 113b und bei der Detektion einer dritten Aktivierungshandlung 100.4c erfolgt die Aktivierung einer dritten zugeordneten Funktion 113c. Diese Funktionen können beispielsweise das Öffnen unterschiedlicher Türen 1.10 des Fahrzeugs 1 sein.

Die voranstehende Erläuterung der Ausführungsformen beschreibt die vorliegende Erfindung ausschließlich im Rahmen von Beispielen. Selbstverständlich können einzelne Merkmale der Ausführungsform sofern technisch sinnvoll, frei miteinander kombiniert werden, ohne den Rahmen der vorliegenden Erfindung zu verlassen.

### Bezugszeichenliste

- 1: Fahrzeug
- 1.1: Türgriff
- 1.2: Emblem
- 1.3: Antenne
- 1.4: Nummernschild
- 1.5: Stoßfänger
- 1.6: Griffleiste
- 1.7: Heckgriff
- 1.8: Schiebetür
- 1.9: Schweller
- 1.10: Tür
- 1.11: Heckklappe
- 1.12: Elektronik

- 2: Sicherheitssystem
- 3: Benutzer
- 4: ID-Geber

- 10: Vorrichtung
- 11: Montagemodul

- 20: Holografievorrichtung
- 21: Lichtquelle
- 22: Lichtleitereinheit
- 22.1: Transportmittel
- 22.2: Beleuchtungsmittel
- 23: Hologrammeinheit
- 23.1: Holografische Platte
- 24: Ausgang
- 30: Holografische Darstellung
- 30a: Erste holografische Darstellung
- 30b: Zweite holografische Darstellung
- 31: Wellenfeld

- 40: Kontrolleinheit
- 40.1: Auswerteeinheit
- 40.2: nicht-flüchtige Speichereinheit
- 40.3: Schnittstelleneinheit

- 50: Sensorvorrichtung
- 50.1: Sensoreinheit
- 50.2: Abstandssensoren
- 50.3: Kameraeinheit
- 51: Überwachungsbereich

- 60: Kommunikationsvorrichtung

- 70: Detektionsvorrichtung
- 71: Detektionsbereich
- 71a: Erster Detektionsbereich
- 71 b: Zweiter Detektionsbereich

- 80: Anzeigevorrichtung
- 81: Anzeigeelement

- 100: Verfahren
- 100.1: Erster Verfahrensschritt: Detektion einer Annäherung
- 100.2: Zweiter Verfahrensschritt: Authentifizierung
- 100.3: Dritter Verfahrensschritt: Erzeugung einer holografischen Darstellung
- 100.3a: Erzeugung einer ersten holografischen Darstellung
- 100.3b: Erzeugung einer zweiten holografischen Darstellung
- 100.3c: Erzeugung einer dritten holografischen Darstellung
- 100.4: Vierter Verfahrensschritt: Detektion einer Aktivierungshandlung
- 100.4a: Detektion einer ersten Aktivierungshandlung
- 100.4b: Detektion einer zweiten Aktivierungshandlung
- 100.4c: Detektion einer dritten Aktivierungshandlung

- 100.5: Fünfter Verfahrensschritt: Emission von Licht
- 100.6: Sechster Verfahrensschritt: Beleuchtung einer Hologrammeinheit
- 100.7: Siebter Verfahrensschritt: Modulation des Lichts

- 110: Funktion des Fahrzeuges
- 111: Erste Funktion
- 112: Zweite Funktion

- 113a: Aktivierung einer ersten zugeordneten Funktion
- 113b: Aktivierung einer zweiten zugeordneten Funktion
- 113c: Aktivierung einer dritten zugeordneten Funktion

## Patentansprüche

1. Vorrichtung (10) zur Aktivierung einer Funktion (110) eines Fahrzeuges (1), insbesondere eines Kraftfahrzeuges (1), mit
einer Holografievorrichtung (20) am Fahrzeug (1) zur Erzeugung einer für einen Benutzer (3) sichtbaren holografischen Darstellung (30) außerhalb des Fahrzeuges (1), und
einer Kommunikationsvorrichtung (60) zur Kommunikation mit einem mobilen ID-Geber (4) für eine Authentifizierung des Benutzers (3), und
einer Sensorvorrichtung (50) die ausgelegt ist, eine Annäherung des Benutzers (3) innerhalb eines Überwachungsbereiches (51) zu detektieren und dann die Kommunikationsvorrichtung (60) zur Authentifizierung des Benutzers (3) anzusteuern,
und
einer Detektionsvorrichtung (70) die ausgelegt ist, eine Aktivierungshandlung des Benutzers (3) an der holografischen Darstellung (30) zu detektieren, wobei die Vorrichtung dazu ausgelegt ist, eine erste Funktion (111) des Fahrzeuges (1) und die holographische Darstellung (30) in Abhängigkeit von der Authentifizierung des Benutzers (3) zu aktivieren, falls die Authentifizierung des Benutzers (3) positiv ist, und eine zweite Funktion (112) des Fahrzeuges (1) in Abhängigkeit von der detektierten Aktivierungshandlung zu aktivieren, wobei
die erste Funktion (111) eine Entriegelung des Fahrzeuges (1), und die zweite Funktion (112) eine Funktion zum Öffnen einer Tür (1.10), einer Schiebetür (1.8) und/oder einer Heckklappe (1.11) des Fahrzeuges (1) ist,
wobei
eine Hologrammeinheit (23) der Holografievorrichtung (20) zur Erzeugung der holografischen Darstellung (30) ein Hologramm aufweist, wobei
die Aktivierungshandtung eine subjektive Interaktion mit der holografischen Darstellung (30) durch den Benutzer (3) ist, wobei
die holografische Darstellung (30) eine realistische, dreidimensionale und räumliche Darstellung einer 3-D Szene bietet, wobei die räumlichen Eigenschaften der holografischen Darstellung (30) die Aktivlerungshandlung vorgeben.

2. Vorrichtung (10) nach Anspruch 1,
**dadurch gekennzeichnet,**
**dass** die Sensorvorrichtung (50) derart ausgebildet ist, dass eine bewusste Handlung detektierbar ist.

3. Vorrichtung (10) nach Anspruch 1 oder 2,
**dadurch gekennzeichnet,**
**dass** das Hologramm veränderbar ausgebildet ist.

4. Vorrichtung (10) nach einem der vorhergehenden Ansprüche,
**dadurch gekennzeichnet,**
**dass** eine Kontrolleinheit (40) vorgesehen ist, wobei die Kontrolleinheit (40) derart ausgebildet ist, dass durch die Kontrolleinheit (40) das Hologramm der Hologrammeinheit (23) bestimmbar ist, wobei eine nicht-flüchtige Speichereinheit (40.2) das vordefinierte Hologramm umfasst.

5. Vorrichtung (10) nach einem der vorhergehenden Ansprüche,
**dadurch gekennzeichnet,**
**dass** die Sensorvorrichtung (50) an einem Emblem (1.2) des Fahrzeuges (1) anordenbar ist.

6. Vorrichtung (10) nach einem der vorhergehenden Ansprüche,
**dadurch gekennzeichnet,**
**dass** die Vorrichtung (10) an einem Montagemodul (11) zur einfachen Montage an dem Fahrzeug (1) angeordnet ist.

7. Vorrichtung (10) nach einem der vorhergehenden Ansprüche,
**dadurch gekennzeichnet,**
**dass** durch die holografische Darstellung (30) Anweisungen für die Aktivierungshandlung an den Benutzer (3) signalisierbar sind.

8. Verfahren (100) zur Aktivierung einer Funktion (110) eines Fahrzeuges (1), insbesondere eines Kraftfahrzeuges (1), mit
einer Holografievorrichtung (20) zur Erzeugung einer für einen Benutzer (3) sichtbaren holografischen Darstellung (30) außerhalb des Fahrzeuges (1), und
einer Kommunikationsvorrichtung (60) zur Kommunikation mit einem mobilen ID-Geber (4) für eine Authentifizierung des Benutzers (3), und
einer Sensorvorrichtung (50) zur Detektion einer Annäherung des Benutzers (3) innerhalb eines Überwachungsbereiches (51), um die Kommunikationsvorrichtung (60) zur Authentifizierung des Benutzers (3) anzusteuern,
und
einer Detektionsvorrichtung (70) zur Detektion einer Aktivierungshandlung des Benutzers (3) an der holografischen Darstellung (30), wobei
die holographische Darstellung (30) in Abhängigkeit von der Authentifizierung des Benutzers (3) und die Funktion (110) in Abhängigkeit von der detektierten Aktivierungshandlung aktiviert wird,
**dadurch gekennzeichnet,**
**dass** zur Erzeugung der holografischen Darstellung (30) die nachfolgenden Schritte durchgeführt werden:
a) Emission von Licht durch eine Lichtquelle (21),
b) Beleuchtung einer Hologrammeinheit (23),
c) Modulation des Lichts durch ein Hologramm der Hologrammeinheit (23), derart, dass ein Wellenfeld (31) entsteht, das für den Benutzer (3) als dreidimensionales Objekt sichtbar ist,
wobei
die Aktivierungshandlung eine subjektive Interaktion mit der holografischen Darstellung (30) durch den Benutzer (3) ist, wobei
die holografische Darstellung (30) eine realistische, dreidimensionale und räumliche Darstellung einer 3-D Szene bietet, wobei die räumlichen Eigenschaften der holografischen Darstellung (30) die Aktivierungshandlung vorgeben, und wobei
die nachfolgenden Schritte durchgeführt werden:
a) Detektion einer Annäherung des Benutzers (3) durch die Sensorvorrichtung (50),
b) Authentifizierung des Benutzers (3) mit dem ID-Geber (4),
c) Aktivierung einer ersten Funktion (111) des Fahrzeuges (1) und der holografischen Darstellung (30), falls die Authentifizierung positiv ist,
d) Detektion der Aktivierungshandlung des Benutzers (3) an der holografischen Darstellung (30) durch die Detektionsvorrichtung (70),
e) Aktivierung einer zweiten Funktion (112) des Fahrzeuges (1) in Abhängigkeit von der detektierten Aktivierungshandlung, wobei
die erste Funktion (111) eine Entriegelung des Fahrzeuges (1), und die zweite Funktion (112) eine Funktion zum Öffnen einer Tür (1.10), einer Schiebetür (1.8) und/oder einer Heckklappe (1.11) des Fahrzeuges (1) ist.

9. Verfahren (100) nach einem der vorhergehenden Ansprüche,
**dadurch gekennzeichnet,**
**dass** die holografische Darstellung (30) ausschließlich bei einer positiven Authentifizierung aktiviert wird.

10. Verfahren (100) nach einem der vorhergehenden Ansprüche,
**dadurch gekennzeichnet,**
**dass** die bewusste Handlung eine definierte Bewegung eines Körperteils des Benutzers (3) ist.

11. Verfahren (100) nach einem der vorhergehenden Ansprüche,
**dadurch gekennzeichnet,**
**dass** die Aktivierungshandlung eine bewusste Handlung im Bereich eines Detektionsbereiches (71) ist, nämlich eine subjektive Berührung und die subjektive Interaktion mit der holografischen Darstellung (30) durch den Benutzer (3).

12. Verfahren (100) nach einem der vorhergehenden Ansprüche,
**dadurch gekennzeichnet,**
**dass** der Detektionsbereich (71) durch definierte Positionen innerhalb des Überwachungsbereichs (51) vorgegeben ist, wobei die Position der holografischen Darstellung (30) und die Position eines zugeordneten Detektionsbereichs (71) im Wesentlichen identisch sind.

13. Verfahren (100) nach einem der vorhergehenden Ansprüche,
**dadurch gekennzeichnet,**
**dass** zumindest ein Detektionsbereich (71) zumindest einer holografischen Darstellung (30) und zumindest einer Funktion (110) des Fahrzeuges (1) zugeordnet sind, sodass die Aktivierungshandlung des Benutzers (3), nämlich die subjektive Berührung einer holografischen Darstellung (30), eine zugeordnete Funktion auslöst.

14. Verfahren (100) nach einem der vorhergehenden Ansprüche,
**dadurch gekennzeichnet,**
**dass** durch eine Betätigung des ID-Gebers (4) ein Triggersignal erzeugt wird, das für einen definierten Zeitraum aktiv ist, wobei das Triggersignal nach einer Authentifizierung automatisch eine Aktivierung der holografischen Darstellung (30) bewirkt.

15. Verfahren (100) nach einem der vorhergehenden Ansprüche,
**dadurch gekennzeichnet,**
**dass** die holografische Darstellung (30) in einer definierten Distanz von dem Fahrzeug (1) erzeugt wird, wodurch eine Distanzinformation zu dem Fahrzeug (1) für Benutzer (3) nachfolgender Fahrzeuge (1) sichtbar ist.

16. Verfahren (100) nach einem der vorhergehenden Ansprüche,
**dadurch gekennzeichnet,**
**dass** die holografische Darstellung (30) situationsabhängig aktiviert wird, nämlich als Abstandssignal, wenn der Abstand zu einem nachfolgenden Fahrzeug (1) eine definierte Distanz unterschreitet.

17. Verfahren (100) nach einem der vorhergehenden Ansprüche,
**dadurch gekennzeichnet,**
**dass** durch die Sensorvorrichtung (50) und/oder die Detektionsvorrichtung (70) der Abstand zu Objekten, nämlich zu nachfolgenden Fahrzeugen (1) detektiert wird.

18. Verfahren (100) nach einem der vorhergehenden Ansprüche,
**dadurch gekennzeichnet,**
**dass** bei einer Detektion des ID-Gebers (4) im Überwachungsbereich (51) ein Authentifizierungsvorgang durchführbar ist, wobei die Kommunikationsvorrichtung (60) ein pollendes System ist, und zyklisch ein Funksignal zur Detektion des ID-Gebers (4) aussendet.

19. Verfahren (100) nach einem der vorhergehenden Ansprüche,
**dadurch gekennzeichnet,**
**dass** zur Erzeugung der holografischen Darstellung (30) bei Schritt c) die Modulation als Intensitäts- und Phasenmodulation des Lichts durch das Hologramm der Hologrammeinheit (23) durchgeführt wird, derart, dass das Wellenfeld (31) entsteht, das für den Benutzer (3) als dreidimensionales Objekt beabstandet zum Fahrzeug (1) sichtbar ist.

20. Verfahren (100) nach einem der vorhergehenden Ansprüche,
**dadurch gekennzeichnet,**
**dass** zur Authentifizierung mit dem ID-Geber (4) durch die Kommunikationsvorrichtung (60) ein Wecksignal an den ID-Geber (4) kontaktlos übertragen wird, woraufhin der ID-Geber (4) ein Antwortsignal mit einem Sicherheitscode an die Kommunikationsvorrichtung (60) überträgt.

21. Verfahren (100) nach einem der vorhergehenden Ansprüche,
**dadurch gekennzeichnet,**
**dass** zumindest eine Vorrichtung (10) nach einem der Ansprüche 1 bis 7 Verwendung findet.

## Claims

1. Device (10) for activating a function (110) of a vehicle (1), in particular a motor vehicle (1), with
a holography device (20) on the vehicle (1) for generating a holographic representation (30) visible to a user (3) substantially outside the vehicle (1), and
a communication device (60) for communicating with a mobile ID transmitter (4) for authenticating the user (3), and
a sensor device (50) adapted to detect an approach of the user (3) within a monitoring area (51) and then to control the communication device (60) for authenticating the user (3), and
a detection device (70) adapted to detect an activating action of the user (3) on the holographic representation (30), the device being adapted to detect the activation action of the user (3) on the holographic representation (30),
to activate a first function (111) of the vehicle (1) and the holographic representation (30) depending on the authentication of the user (3), if the authentication of the user (3) is positive, and to activate a second function (112) of the vehicle (1) depending on the detected activation action, wherein
the first function (111) is an unlocking of the vehicle (1), and the second function (112) is a function for opening a door (1.10), a sliding door (1.8) and/or a tailgate (1.11) of the vehicle (1), wherein
a hologram unit (23) of the holographic device (20) for generating the holographic representation (30) comprises a hologram, wherein the activation action is a subjective interaction with the holographic representation (30) by the user (3), wherein the holographic representation (30) provides a realistic, three-dimensional and spatial representation of a 3-D scene, wherein the spatial properties of the holographic representation (30) substantially dictate the activation action.

2. Device (10) according to claim 1,
**characterized in that**,
the sensor device (50) is designed such that a conscious action can be detected.

3. Device (10) according to claim 1 or 2,
**characterized in that**,
the hologram is designed to be mutable.

4. Device (10) according to one of the preceding claims, **characterized in that** a control unit (40) is provided, the control unit (40) being designed in such a way that the hologram of the hologram unit (23) can be determined by the control unit (40), a non-volatile memory unit (40.2) comprising the predefined hologram.

5. Device (10) according to one of the preceding claims, **characterized in that** the sensor device (50) can be arranged on an emblem (1.2) of the vehicle (1).

6. Device (10) according to one of the preceding claims, **characterized in that** the device (10) is arranged on a mounting module (11) for easy mounting on the vehicle (1).

7. Device (10) according to one of the preceding claims, **characterized in that** instructions for the activation action can be signalled to the user (3) by the holographic representation (30).

8. Method (100) for activating a function (110) of a vehicle (1), in particular a motor vehicle (1), comprising
a holography device (20) for generating a holographic representation (30) visible to a user (3) substantially outside the vehicle (1), and
a communication device (60) for communicating with a mobile ID transmitter (4) for authenticating the user (3), and
a sensor device (50) for detecting an approach of the user (3) within a monitoring area (51) in order to control the communication device (60) for authenticating the user (3), and a detection device (70) for detecting an activation action of the user (3) on the holographic representation (30), wherein the holographic representation (30) is activated in dependence on the authentication of the user (3) and the function (110) is activated in dependence on the detected activation action,
**characterized in that**,
the following steps are carried out to generate the holographic representation (30):
a) emission of light by a light source (21),
b) illumination of a hologram unit (23),
c) modulation of the light by a hologram of the hologram unit (23) in such a way that a wave field (31) is created which is visible to the user (3) substantially as a three-dimensional object,
wherein the activation action is a subjective interaction with the holographic representation (30) by the user (3), wherein the holographic representation (30) provides a realistic, three-dimensional and spatial representation of a 3-D scene, wherein the spatial properties of the holographic representation (30) dictate the activation action, and wherein the following steps are carried out:
a) detection of an approach of the user (3) by the sensor device (50)
b) authentication of the user (3) with the ID transmitter (4),
c) activation of a first function (111) of the vehicle (1) and the holographic representation (30) if the authentication is positive,
d) detection of the activation action of the user (3) on the holographic representation (30) by the detection device (70),
e) activation of a second function (112) of the vehicle (1) depending on the detected activation action, wherein
the first function (111) is an unlocking of the vehicle (1), and the second function (112) is a function for opening a door (1.10), a sliding door (1.8) and/or a tailgate (1.11) of the vehicle (1).

9. Method (100) according to one of the preceding claims, **characterized in that** the holographic representation (30) is activated exclusively in the event of positive authentication.

10. Method (100) according to one of the preceding claims, **characterized in that** the conscious action is a defined movement of a part of the user's body (3).

11. Method (100) according to one of the preceding claims, **characterized in that** the activation action is a conscious action in the area of a detection area (71), namely a subjective touch and the subjective interaction with the holographic representation (30) by the user (3).

12. Method (100) according to one of the preceding claims, **characterized in that** the detection area (71) is predetermined by defined positions within the monitoring area (51), the position of the holographic representation (30) and the position of an associated detection area (71) being substantially identical.

13. Method (100) according to one of the preceding claims, **characterized in that** at least one detection area (71) is assigned to at least one holographic representation (30) and at least one function (110) of the vehicle (1), so that the activation action of the user (3), namely the subjective touch of a holographic representation (30), triggers an assigned function.

14. Method (100) according to one of the preceding claims, **characterized in that** an actuation of the ID transmitter (4) generates a trigger signal which is active for a defined period of time, the trigger signal automatically causing the holographic representation (30) to be activated after authentication.

15. Method (100) according to one of the preceding claims, **characterized in that** the holographic representation (30) is generated at a defined distance from the vehicle (1), whereby distance information about the vehicle (1) is visible to users (3) of following vehicles (1).

16. Method (100) according to one of the preceding claims, **characterized in that** the holographic representation (30) is activated depending on the situation, namely as a distance signal when the distance to a following vehicle (1) falls below a defined distance.

17. Method (100) according to one of the preceding claims, **characterized in that** the distance to objects, namely to following vehicles (1), is detected by the sensor device (50) and/or the detection device (70).

18. Method (100) according to one of the preceding claims, **characterized in that** an authentication process can be carried out when the ID transmitter (4) is detected in the monitoring area (51), the communication device (60) being a polling system and cyclically emitting a radio signal for detection of the ID transmitter (4).

19. Method (100) according to one of the preceding claims, **characterized in that** in order to generate the holographic representation (30) in step c), the modulation is carried out as an intensity and phase modulation of the light by the hologram of the hologram unit (23) in such a way that the wave field (31) is produced which is visible to the user (3) as a three-dimensional object at a distance from the vehicle (1).

20. Method (100) according to one of the preceding claims, **characterized in that** for authentication with the ID transmitter (4), a wake-up signal is transmitted contactlessly to the !D transmitter (4) by the communication device (60), whereupon the ID transmitter (4) transmits a response signal with a security code to the communication device (60).

21. Method (100) according to one of the preceding claims, **characterized in that** at least one device (10) is used according to one of claims 1 to 7.

## Revendications

1. Dispositif (10) pour activer une fonction (110) d'un véhicule (1), en particulier d'un véhicule automobile (1), avec
un dispositif holographique (20) sur le véhicule (1) pour générer une représentation holographique (30) visible par un utilisateur (3) essentiellement à l'extérieur du véhicule (1), et
un dispositif de communication (60) pour communiquer avec un émetteur d'identification mobile (4) pour authentifier l'utilisateur (3), et
un dispositif capteur (50) adapté pour détecter une approche de l'utilisateur (3) dans une zone de surveillance (51) et ensuite pour contrôler le dispositif de communication (60) afin d'authentifier l'utilisateur (3), et
un dispositif de détection (70) adapté pour détecter une action d'activation de l'utilisateur (3) sur la représentation holographique (30), le dispositif étant adapté pour détecter l'action d'activation de l'utilisateur (3) sur la représentation holographique (30),
pour activer une première fonction (111) du véhicule (1) et la représentation holographique (30) en fonction de l'authentification de l'utilisateur (3), si l'authentification de l'utilisateur (3) est positive, et d'activer une deuxième fonction (112) du véhicule (1) en fonction de l'action d'activation détectée, dans laquelle
la première fonction (111) est un déverrouillage du véhicule (1), et la seconde fonction (112) est une fonction d'ouverture d'une porte (1.10), d'une porte coulissante (1.8) et/ou d'un hayon (1.11) du véhicule (1),
dans lequel une unité d'hologramme (23) du dispositif holographique (20) pour générer la représentation holographique (30) comprend un hologramme, dans lequel l'action d'activation est une interaction subjective avec la représentation holographique (30) par l'utilisateur (3), dans lequel la représentation holographique (30) fournit une représentation réaliste, essentiellement tridimensionnelle et spatiale d'une scène en 3-D, dans lequel les propriétés spatiales de la représentation holographique (30) dictent l'action d'activation.

2. Dispositif (10) selon la revendication 1,
**caractérisé en ce que**,
le dispositif capteur (50) est conçu de telle sorte qu'une action consciente peut être détectée.

3. Dispositif (10) selon la revendication 1 ou 2,
**caractérisé en ce que**,
l'hologramme est conçu pour être mutable.

4. Dispositif (10) selon l'une des revendications précédentes, **caractérisé en ce qu'**il est prévu une unité de commande (40), l'unité de commande (40) étant conçue de telle sorte que l'hologramme de l'unité d'hologramme (23) peut être déterminé par l'unité de commande (40), une unité de mémoire non volatile (40.2) comprenant l'hologramme prédéfini.

5. Dispositif (10) selon l'une des revendications précédentes, **caractérisé en ce que** le dispositif capteur (50) peut être disposé sur un emblème (1.2) du véhicule (1).

6. Dispositif (10) selon l'une des revendications précédentes, **caractérisé en ce que** le dispositif (10) est disposé sur un module de montage (11) pour un montage facile sur le véhicule (1).

7. Dispositif (10) selon l'une des revendications précédentes, **caractérisé en ce que** les instructions pour l'action d'activation peuvent être signalées à l'utilisateur (3) par la représentation holographique (30).

8. Procédé (100) pour activer une fonction (110) d'un véhicule (1), en particulier d'un véhicule automobile (1), avec
un dispositif holographique (20) pour générer une représentation holographique (30) visible par un utilisateur (3) à l'extérieur du véhicule (1), et
un dispositif de communication (60) pour communiquer avec un émetteur d'identification mobile (4) pour authentifier l'utilisateur (3), et
un dispositif capteur (50) pour détecter une approche de l'utilisateur (3) dans une zone de surveillance (51) afin de contrôler le dispositif de communication (60) pour authentifier l'utilisateur (3), et
un dispositif de détection (70) pour détecter une action d'activation de l'utilisateur (3) sur la représentation holographique (30), dans lequel la représentation holographique (30) est activée en fonction de l'authentification de l'utilisateur (3) et la fonction (110) est activée en fonction de l'action d'activation détectée,
**caractérisé en ce que**,
les étapes suivantes sont effectuées pour générer la représentation holographique (30) :
a) émission de lumière par une source lumineuse (21),
b) illumination d'une unité d'hologramme (23),
c) modulation de la lumière par un hologramme de l'unité holographique (23) de manière à créer un champ d'ondes (31) qui est visible par l'utilisateur (3) en tant qu'objet tridimensionnel,
dans laquelle l'action d'activation est une interaction subjective avec la représentation holographique (30) par l'utilisateur (3), dans laquelle la représentation holographique (30) fournit une représentation réaliste, essentiellement tridimensionnelle et spatiale d'une scène en 3D, dans laquelle les propriétés spatiales de la représentation holographique (30) dictent l'action d'activation, et
dans laquelle les étapes suivantes sont réalisées :
a) détection d'une approche de l'utilisateur (3) par le dispositif capteur (50)
b) authentification de l'utilisateur (3) avec l'émetteur d'identification (4),
c) activation d'une première fonction (111) du véhicule (1) et de la représentation holographique (30) si l'authentification est positive,
d) la détection de l'action d'activation de l'utilisateur (3) sur la représentation holographique (30) par le dispositif de détection (70),
e) l'activation d'une deuxième fonction (112) du véhicule (1) en fonction de l'action d'activation détectée, dans laquelle
la première fonction (111) est un déverrouillage du véhicule (1), et la seconde fonction (112) est une fonction d'ouverture d'une porte (1.10), d'une porte coulissante (1.8) et/ou d'un hayon (1.11) du véhicule (1).

9. Méthode (100) selon l'une des revendications précédentes, **caractérisée en ce que** le représentation holographique (30) est activé exclusivement en cas d'authentification positive.

10. Méthode (100) selon l'une des revendications précédentes, **caractérisée en ce que** l'action consciente est un mouvement défini d'une partie du corps de l'utilisateur (3).

11. Méthode (100) selon l'une des revendications précédentes, **caractérisée en ce que** l'action d'activation est une action consciente dans la zone d'une zone de détection (71), à savoir un toucher subjectif et l'interaction subjective avec la représentation holographique (30) par l'utilisateur (3).

12. Méthode (100) selon l'une des revendications précédentes, **caractérisée en ce que** la zone de détection (71) est prédéterminée par des positions définies dans la zone de surveillance (51), la position de la représentation holographique (30) et la position d'une zone de détection associée (71) étant sensiblement identiques.

13. Méthode (100) selon l'une des revendications précédentes, **caractérisée en ce qu'**au moins une zone de détection (71) est affectée à au moins une représentation holographique (30) et à au moins une fonction (110) du véhicule (1), de sorte que l'action d'activation de l'utilisateur (3), à savoir le toucher subjectif d'une représentation holographique (30), déclenche une fonction affectée.

14. Méthode (100) selon l'une des revendications précédentes, **caractérisée en ce qu'**un actionnement de l'émetteur d'identification (4) génère un signal de déclenchement qui est actif pendant une période de temps définie, le signal de déclenchement entraînant automatiquement l'activation de la représentation holographique (30) après authentification.

15. Méthode (100) selon l'une des revendications précédentes, **caractérisée en ce que** la représentation holographique (30) est générée à une distance définie du véhicule (1), les informations relatives à la distance du véhicule (1) étant visibles par les utilisateurs (3) des véhicules suivants (1).

16. Méthode (100) selon l'une des revendications précédentes, **caractérisée en ce que** le représentation holographique (30) est activé en fonction de la situation, à savoir comme un signal de distance lorsque la distance par rapport à un véhicule suivant (1) tombe en dessous d'une distance définie.

17. Méthode (100) selon l'une des revendications précédentes, **caractérisée en ce que** la distance par rapport aux objets, à savoir par rapport aux véhicules qui suivent (1), est détectée par le dispositif capteur (50) et/ou le dispositif de détection (70).

18. Méthode (100) selon l'une des revendications précédentes, **caractérisée en ce qu'**un processus d'authentification peut être effectué lorsque l'émetteur d'identification (4) est détecté dans la zone de surveillance (51), le dispositif de communication (60) étant un système d'interrogation et émettant cycliquement un signal radio pour la détection de l'émetteur d'identification (4).

19. Méthode (100) selon l'une des revendications précédentes, **caractérisée** en ce pour générer la représentation holographique (30) à l'étape c), la modulation est effectuée sous la forme d'une modulation d'intensité et de phase de la lumière par l'hologramme de l'unité holographique (23) de manière à produire le champ d'ondes (31) qui est essentiellement visible par l'utilisateur (3) en tant qu'objet tridimensionnel à distance du véhicule (1).

20. Méthode (100) selon l'une des revendications précédentes, **caractérisée** en ce pour l'authentification avec l'émetteur d'identification (4), un signal de réveil est transmis sans contact à l'émetteur d'identification (4) par le dispositif de communication (60), après quoi l'émetteur d'identification (4) transmet un signal de réponse avec un code de sécurité au dispositif de communication (60).

21. Méthode (100) selon l'une des revendications précédentes, **caractérisée en ce qu'**au moins un dispositif (10) est utilisé selon l'une des revendications 1 à 7.
